(19) Europäisches Patentamt
European Patent Office
Office européen des brevets

(11) **EP 4 583 257 A1**

(12) **EUROPEAN PATENT APPLICATION**
published in accordance with Art. 153(4) EPC

(43) Date of publication:
**09.07.2025 Bulletin 2025/28**

(21) Application number: **22968169.7**

(22) Date of filing: **14.12.2022**

(51) International Patent Classification (IPC):
**H01M 50/10** (2021.01)   **H01M 50/147** (2021.01)
**H01M 50/169** (2021.01)

(52) Cooperative Patent Classification (CPC):
**H01M 50/10; H01M 50/147; H01M 50/169;**
Y02E 60/10

(86) International application number:
**PCT/CN2022/139146**

(87) International publication number:
**WO 2024/124459 (20.06.2024 Gazette 2024/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
(Hong Kong) Limited
Central (HK)**

(72) Inventors:
• JIN, Haizu
**Ningde, Fujian 352100 (CN)**
• CHAI, Zhisheng
**Ningde, Fujian 352100 (CN)**

(74) Representative: **Frick, Robert
Lorenz Seidler Gossel
Rechtsanwälte Patentanwälte
Partnerschaft mbB
Widenmayerstraße 23
80538 München (DE)**

(54) **BATTERY CELL, BATTERY, AND ELECTRICAL APPARATUS**

(57)   Provided are a battery cell (20), a battery (100), and an electrical apparatus, where the battery cell (20) includes an electrode assembly (22), a case (21), and a current collecting end cover (23). The electrode assembly (22) has a first tab (221A), the case (21) defines an accommodation space and an opening located at an end of the accommodation space, the accommodation space being used to accommodate the electrode assembly (22), and the current collecting end cover (23) is fixedly connected to the case (21), the current collecting end cover (23) sealingly covers the opening of the case (21), and the current collecting end cover (23) is electrically connected to the first tab (221A).

FIG. 5

EP 4 583 257 A1

## Description

## TECHNICAL FIELD

The present application relates to the technical field of batteries, and in particular to a battery cell, a battery, and an electrical apparatus.

## BACKGROUND

With energy saving and emission reduction being the key to the sustainable development of the automobile industry, electric vehicles have become an important part of the sustainable development of automotive industry due to their advantages of energy saving and environmental protection. For the electric vehicles, the battery technology is another important factor related to their development.

In some cases, a battery is electrically connected to an electrode assembly using a current collecting member to divert and transmit electrical energy to an electrical apparatus, but the arrangement of the current collecting member inside the case of the battery inevitably takes up space inside the case, which in turn adversely affects the capacity of the battery.

## SUMMARY OF THE INVENTION

The present application is intended to at least solve one of the technical problems existing in the prior art. To this end, an objective of the present application is to propose a battery cell, a battery, and an electrical apparatus to improve the utilization of the internal space of the case of the battery.

An embodiment of a first aspect of the present application provides a battery cell, the battery cell including an electrode assembly, a case, and a current collecting end cover. The electrode assembly has a first tab, the case defines an accommodation space and an opening located at an end of the accommodation space, the accommodation space being used to accommodate the electrode assembly, and the current collecting end cover is fixedly connected to the case, the current collecting end cover sealingly covers the opening of the case, and the current collecting end cover is electrically connected to the first tab.

In this embodiment, by making the current collecting end cover electrically connected to the first tab and fixedly connected to the case to sealingly cover the opening of the case, the current collecting end cover can act as both the current collecting member and the sealing end cover and play the roles of current collection and of sealing, thus reducing the number of parts and the welding process, so as to contribute to the simplification of the structure of the battery cell and to increase the space utilization rate in the case, thereby reducing the internal resistance of the battery cell.

In some embodiments, the current collecting end cover is weldedly connected to the case such that the current collecting end cover is conductively connected to the case. By means of welding, a conducive sealed connection between the current collecting end cover and the case can be realized, and the lead-out of the electrodes and the sealing of the case of the battery cell can be realized, thus simplifying the structure of the battery.

In some embodiments, the case includes a main body portion and a welding portion, the main body portion surrounding an outer side of the electrode assembly, and the welding portion being located at an end of the main body portion close to the opening, and the current collecting end cover being weldedly connected to the welding portion to form a first fusion joint portion. By welding and fusing the current collecting end cover with the welding portion close to an opening end of the case to form the first fusion joint portion, the internal resistance can be reduced while realizing a sealed connection, so as to realize a conductive connection, thereby simplifying the structure of the end cover of the battery.

In some embodiments, the current collecting end cover includes a first connecting portion and a second connecting portion, where the first connecting portion is electrically connected to the first tab; and the second connecting portion is connected to the first connecting portion, and the second connecting portion is welded to the welding portion of the case to form the first fusion joint portion. Welding with the first tab and the case through the first connecting portion and the second connecting portion, respectively, can effectively separate the welding position of the current collecting end cover with the first tab and the welding position of the current collecting end cover with the case, so as to avoid adverse influences caused by mutual interference during the laser welding, which is conducive to reducing the internal resistance of the battery cell.

In some embodiments, the second connecting portion encloses an outer edge of the first connecting portion and protrudes in a direction away from the electrode assembly. The setting of the first connecting portion and the second connecting portion being not coplanar allows positions where the first fusion joint portion formed by welding on the current collecting end cover is connected to the first tab to be separately located in different orientations, thereby avoiding mutual influences during welding.

In some embodiments, an end face at a side of the second connecting portion away from the first connecting portion is flush with an end face at a side of the welding portion away from the main body portion, so that the second connecting portion and the welding portion form the first fusion joint portion by butt-welding at the flush end faces. During the butt-welding, there is sufficient space for the laser to be arranged outside the battery, which is conducive to improving the precision of the laser welding and thus the quality of the welding; at the same time, the first fusion joint portion formed by means of butt-welding is located on the end faces of the second connecting portion and the welding portion, which can reduce the length of the second connecting portion that is fitted with the welding portion in the axial direction of the electrode assembly, thereby reducing the amount of the occupied internal space of the case of the battery.

In some embodiments, the first fusion joint portion is configured so that a laser penetrates the second connecting portion in a direction intersecting an axis of the electrode assembly and at least partially fuses the welding portion to form the first fusion joint portion. In welding by means of the internal welding method, the emission direction of the laser is directed towards the outside of the battery, which can avoid damage to the electrodes caused by the laser being emitted towards the electrode assembly during welding, thus improving the safety of the welding operation.

In some embodiments, the first fusion joint portion does not penetrate the welding portion. The parameters of the laser welding can be controlled during the welding so that the first fusion joint portion does not penetrate the welding portion, which is conducive to avoiding cracks in the first fusion joint portion formed by the welding due to the penetration through the welding portion, which in turn affects the structural strength and sealing performance of the battery.

In some embodiments, the second connecting portion has a thickness of t1 in a direction perpendicular to a central axis of the electrode assembly, and the second connecting portion has a height of h0 in an axial direction of the electrode assembly, t1 and h0 satisfying: $2 \leq h0/t1 \leq 6$. The reasonable selection of the size of the second connecting portion can better balance the requirement of the laser welding for the size of the second connecting portion along the axial direction of the electrode assembly and the energy density of the battery cell.

In some embodiments, the second connecting portion has a thickness of t1 in a direction perpendicular to a central axis of the electrode assembly, t1 satisfying $0.1mm \leq t1 \leq 0.5mm$. By selecting a proper thickness of the second connecting portion, the strength and the overcurrent capability of the current collecting end cover 23 can be balanced.

In some embodiments, an outer side face of the second connecting portion is in an interference fit with an inner side face of the welding portion. By the setting of the second connecting portion and the case in an interference fit, there is no gap between the outer side face of the second connecting portion of the current collecting end cover and the inner side face of the case, so that the current collecting end cover and the case can be tightly connected, which makes the connection reliable and, at the same time, can alleviate false welding and leaky welding due to the gap being too large and damage to the electrode assembly due to the laser leaking out during the welding, which is conducive to guaranteeing the quality of the welding.

In some embodiments, the second connecting portion includes a plurality of first protruding portions provided at intervals and protruding in a direction away from the electrode assembly, and second protruding portions located between two adjacent first protruding portions, where a height of the second protruding portions is less than that of the first protruding portions in the axial direction of the electrode assembly; and the first protruding portions and the second protruding portions are separately weldedly connected to the welding portion to form parts of the first fusion joint portion. This design can enable the first protruding portion to have a certain deformability during mounting, which better balances the structural strength of the current collecting end cover and the feasibility of mounting and positioning.

In some embodiments, a plurality of said second protruding portions are uniformly distributed centered on a central axis of the electrode assembly. The first fusion joint portion formed between the current collecting end cover and the case maintains a symmetrical structure, which can enhance the impact resistance of the weld mark, thereby avoiding the rupture of the weld mark due to uneven force when impacted by an external force.

In some embodiments, an inner diameter of the main body portion is smaller than an inner diameter of the welding portion so that a step face is formed at a connection of an inner surface of the main body portion with an inner surface of the welding portion, with the current collecting end cover abutting against the step face. The difference in inner diameters of the main body portion and the welding portion causes a step face to be formed at a connection of the two, and the current collecting end cover can be positioned by means of this step face, thereby realizing more convenient butt positioning, thus improving the assembly efficiency.

In some embodiments, a wall thickness of the main body portion is equal to a wall thickness of the welding portion. This makes it possible to maintain the strength of the case while forming a step portion for better positioning of the current collecting end cover.

In some embodiments, an outer side face of the main body portion is coplanar with an outer side face of the welding portion. The outer side face of the main body portion being coplanar with the outer side face of the welding portion can maintain the consistency of the dimensions of the outer surfaces of the battery cells, which facilitates the combined assembly of a plurality of battery cells.

In some embodiments, a difference between an inner diameter of the welding portion and an inner diameter of the main body portion is greater than or equal to 0.1 mm. The step face formed between the welding portion and the main body portion having a certain width can better provide positioning for mounting the current collecting end cover, thus improving the assembly efficiency.

In some embodiments, the case further includes a bent portion, the bent portion being connected to an end of the welding portion that is away from the main body portion and bent towards an inner side of the welding portion so as to form a gap between the bent portion and the welding portion, with at least part of the second connecting portion being located within the gap. By providing the bent portion, displacement of the current collecting end cover can be limited so as to avoid disengagement of the current collecting end cover from the case, thereby enabling the current collecting end cover to be reliably connected to the case.

In some embodiments, the battery cell further includes a sealing ring, the sealing ring being located within the gap, and the sealing ring being at least partially sandwiched between the second connecting portion and the bent portion. By providing a sealing ring, the sealing performance of the battery cell can be further improved, which is conducive to avoiding leakage of the electrolyte.

In some embodiments, the bent portion includes a connecting edge and an annular edge, the annular edge being connected to the welding portion of the case via the connecting edge, with an end of the annular edge that is away from the connecting edge being close to the electrode assembly; and the sealing ring includes a first sealing body and a second sealing body that are connected, the first sealing body being sandwiched between the second connecting portion and the annular edge and the second sealing body being sandwiched between a side of the second connecting portion that faces away from the electrode assembly and the connecting edge. The structural design of the sealing ring enables the second connecting portion to realize sealed fitting with both the annular edge and the connecting edge, which achieves a better sealing effect.

In some embodiments, the first sealing body includes a first surface facing the second connecting portion and a second surface facing the annular edge, at least one of the first surface and the second surface being provided with a third protruding portion. By means of the third protruding portion, the sealing performance of the surface fitting can be further improved, which is conducive to avoiding leakage of the electrolyte from the slit between the current collecting end cover and the case.

In some embodiments, the third protruding portion has a width of a along an axial direction of the electrode assembly and a height of b along a direction perpendicular to the axial direction of the electrode assembly, a and b satisfying: $0.5mm \leq a \leq 2mm$, and $0.2mm \leq b \leq 0.5mm$. By reasonably selecting the size of the third protruding portion, the clamping effect of the first sealing body on the second connecting portion and the annular edge can be enhanced, and thus the sealing effect of the first sealing body can be improved.

In some embodiments, the first connecting portion is welded to the first tab to form the second fusion joint portion. The formation of the second fusion joint portion by means of welding makes it possible to fixedly connect the current collecting end cover to the electrode assembly, which improves the overall strength of the battery so that a stable conductive connection between the current collecting end cover and the electrode assembly can be realized even when faced with an impact of an external force.

In some embodiments, the first connecting portion includes a first side face facing the electrode assembly and a second side face away from the electrode assembly, at least one of the first side face and the second side face being provided with at least one reinforcing rib protruding from a surface on which it is located, with the reinforcing rib being used to reinforce the current collecting end cover. The first connecting portion of the current collecting end cover being provided with a reinforcing rib protruding from a plane in which it is located can enhance the deformation resistance of the current collecting end cover.

In some embodiments, at least part of the reinforcing rib located on the first side face is weldedly connected to the first tab to form the second fusion joint portion. The reinforcing rib can abut against the first tab when the current collecting end cover is aligned with the electrode assembly, and the welding of the reinforcing rib to the first tab can reduce false welding due to the gap between the two, which improves the quality of the welding of the second fusion joint portion, and at the same time enhances the structural strength of the current collecting end cover.

In some embodiments, the reinforcing rib for forming the second fusion joint portion is a stamped groove, a side of the stamped groove opposite from the electrode assembly being recessed into a second side face of the first connecting portion. The preparation of a stamped groove as a reinforcing rib on the first connecting portion by means of stamping is a simple and cost-controlled process and does not increase the weight of the current collecting end cover, and the recess on the side opposite from the electrode assembly can also be used to indicate a welding position for forming the second fusion joint portion, which facilitates simplifying the positioning of the welding.

In some embodiments, the second fusion joint portion is arranged at uniform intervals along a circumferential direction of a center of the first connecting portion. The electrical energy of the electrode assembly can be uniformly transmitted to all parts of the current collecting end cover, thereby further improving the uniformity of the transmission of the electrical energy, which is helpful in avoiding the flow of excessive electrical energy through partial positions of the current collecting end cover.

In some embodiments, the second fusion joint portion is of a plurality of radially extending spoke-like patterns or a plurality of crescent-like patterns. The design of the pattern of the second fusion joint portion enables the current to be directed to a position of the current collecting end cover close to the central region and enables the current to be directed to an edge of the current collecting end cover close to the inner side face of the case, which enables the current collecting end cover to conduct electrical energy uniformly.

In some embodiments, the first connecting portion includes a tab connecting portion and a pressure relief portion, the tab connecting portion being weldedly connected to the first tab to form a second fusion joint portion, and the pressure relief portion being configured to relieve an internal pressure of the battery cell when the internal pressure or temperature of the battery cell reaches a threshold. Through the design of the pressure relief mechanism, when the internal pressure of the battery cell reaches the threshold, the pressure relief mechanism can play the function of pressure relief, so as to reduce the fire and explosion and other safety hazards that may easily occur during the use of the battery cell.

In some embodiments, the tab connecting portion surrounds an outer side of the pressure relief portion. In this way, the current of the electrode plate flows through the second connecting portion, the first fusion joint portion, and the case after passing through the second fusion joint portion without having to pass through the pressure relief portion, which is of inconsistent thickness, thereby reducing the effect of the pressure relief portion on the internal resistance.

In some embodiments, the tab connecting portion and the pressure relief portion are provided in an integrally molded manner. This can reduce the welded connection between the pressure relief portion and the tab connecting portion, so that mutual interference between the welding operations of the two can be avoided, and man-hours can be saved, thereby improving the efficiency of production.

In some embodiments, the pressure relief portion includes a scored groove, the scored groove being configured to crack along the scored groove to vent the internal pressure of the battery cell when the internal pressure or temperature of the battery cell reaches the threshold. Pressure relief is made easier by providing scored grooves on the surface, which eliminates the need for unnecessary welded connections and does not sacrifice the weight and space of the battery.

In some embodiments, the scored groove is located on a surface of the first connecting member that faces the electrode assembly. In this embodiment, the scored groove is arranged on the first side face of the first connecting portion that faces the electrode assembly, so that the scored groove is located in the interior of the battery cell, which is conductive to avoiding failure of the pressure relief function due to oxidation or corrosion.

In some embodiments, the scored groove is an annular groove centered on a center of the first connecting portion. The scored groove with a regular pattern can avoid inconsistent pressure decay across the scored groove, which is more conducive to setting and controlling the pressure or temperature threshold for pressure relief.

In some embodiments, a central angle $\propto$ corresponding to the scored groove has a value range of: $270° \leq \propto \leq 330°$. By selecting a suitable central angle, it can be better adapted to the material and thickness of the current collecting end cover as well as the set pressure relief threshold, thus better satisfying the pressure relief requirements.

In some embodiments, the first connecting portion further includes a central region, the central region being a region of projection of a central hole of the electrode assembly on the first connecting portion; and the scored groove is located at the periphery of the central region. The scored groove in the pressure relief portion is located at the periphery of the central region and on the inner side of the tab connecting portion, thereby avoiding the tab connecting portion and the central hole, so that the realization of the pressure relief function can be better secured.

In some embodiments, the central region is a circular region and the scored groove is an annular groove centered on a center of the first connecting portion, the central region having a diameter of $d1$; and the scored groove having a minimum diameter of d2, where

$$\frac{d2}{d1} \leq 4$$

. Limiting the minimum diameter of the scored groove to be larger than the diameter of the central region can ensure that the scored groove is located outside of the central region, so that when an abnormal condition occurs within the electrode assembly and gas is generated, it is easier to converge through the central hole and apply pressure to the scored groove on the end cover to cause the scored groove to crack and release the pressure upon satisfying the preset condition.

In some embodiments, the tab connecting portion is provided with at least one stamped groove that is weldedly connected to the first tab to form the second fusion joint portion, the scored groove being located between the tab connecting portion and the central region. Arranging the scored groove between the tab connecting portion and the central region can alleviate an unfavorable influence on the current collecting effect of the current collecting end cover, and also facilitate the realization of the pressure relief function of the scored groove.

In some embodiments, the first connecting portion is circular, a circle in which an end point of the second fusion joint portion that is farthest from the center of the first connecting portion is located has a diameter of $d3$, and the first connecting portion has a diameter of $d4$, where $d3 < d4$. The maximum diameter of the second fusion joint portion being smaller than the diameter of the first connecting portion makes it possible to space the position of the second fusion joint portion from the case and the first fusion joint portion, thereby avoiding affecting the quality of welding due to mutual influence during the welding.

In some embodiments, the central region is a circular region centered on the center of the first connecting portion, and the scored groove is an annular groove centered on the center of the first connecting portion, and the central region has a diameter of $d1$; the scored groove has a diameter of $d2$, the fusion joint region has an outer diameter of $d3$, and the first connecting portion has a diameter of $d4$, which satisfy:

$$0.8 \leq \frac{d4^2 - d3^2}{d2^2 - d1^2} \leq 1.2$$

. When the dimensions of the current collecting end cover satisfy this condition, the internal resistance of the battery is small.

In some embodiments, the tab connecting portion of the first connecting portion has a minimum thickness of $t2$ along an axial direction of the electrode assembly, a material of the current collecting end cover has a Young's modulus of $E$, and the electrode assembly has a weight of $W$, where $t2 \times E / W \geq 7000 \mathrm{mm}^{-1}$.

By setting the above parameters of the current collecting end cover, the load-bearing capability of the current collecting end cover can be ensured, which can suppress deformation or even breakage under the gravity of the electrode assembly.

In some embodiments, at least one of two opposing surfaces of the current collecting end cover and the case is provided with a paste mask layer. Providing a paste mask layer on the surface of the weld can assist in improving the quality of welding.

In some embodiments, the material of the first material layer is copper, the material of the second material layer is carbon steel, and the material of the paste mask layer is nickel. The selection of copper with high conductivity for the current collecting end cover can better realize current collection, thus reducing the internal resistance of the battery. The selection of carbon steel for the case can balance structural strength and conductivity. The use of nickel as the paste mask layer can assist in improving the quality of the weld mark, thus helping to avoid cracks.

In some embodiments, a surface of the current collecting end cover is provided with a first paste mask layer, and a surface of the case is provided with a second paste mask layer, the first paste mask layer having a thickness of $u1$, and the second paste mask layer having a thickness of $u2$, where $1um \leq u1 + u2 \leq 9um$. By reasonably setting the thickness of the paste mask layers, it is possible to control the weight of the end cover and the case while assisting the welding, thus reducing unnecessary weight loss.

In some embodiments, the electrode assembly further includes a second tab having a polarity different from that of the first tab; and where the battery cell further includes electrode terminals, the electrode terminals being located at an end of the case that is away from the opening and being electrically connected to the second tab.

Embodiments of a second aspect of the present application provide a battery including the battery cell in embodiments as described above.

Embodiments of a third aspect of the present application provide an electrical apparatus including the battery in embodiments as described above, the battery being used to provide electrical energy.

The above description is only a summary of the technical solutions of the present application. In order to understand the technical means of the present application more clearly, the technical means can be implemented according to the content of the specification. Furthermore, to make the above objectives and other objectives, features, and advantages of the present application more comprehensible, specific implementations of the present application are exemplified below.

**DESCRIPTION OF DRAWINGS**

In the drawings, unless otherwise specified, like reference numerals indicate like or similar parts or elements throughout multiple drawings. These drawings are not necessarily drawn to scale. It should be understood that these accompanying drawings depict only some implementations disclosed in accordance with the present application and should not be considered as limiting the scope of the present application.

FIG. 1 shows a structural schematic diagram of a vehicle provided in some embodiments of the present application;

FIG. 2 shows an exploded schematic diagram of a battery provided in some embodiments of the present application;

FIG. 3 shows a structural schematic diagram of a battery cell provided in some embodiments of the present application;

FIG. 4 shows a main view of the battery cell shown in FIG. 3;

FIG. 5 shows a cross-sectional schematic diagram of the battery cell in some embodiments shown in FIG. 4 along the direction of A-A;

FIG. 6 shows a partially enlarged view at B in FIG. 5;

FIG. 7 shows a cross-sectional schematic diagram of a battery cell provided in some other embodiments of the present application along the direction of A-A;

FIG. 8 shows a structural schematic diagram of a current collecting end cover in some embodiments of the present application;

FIG. 9 shows a partially enlarged view at C in FIG. 7;

FIG. 10 shows a partially enlarged view at C in FIG. 7 in some other embodiments.

FIG. 11 shows a cross-sectional schematic diagram of a battery cell provided in some further embodiments of the present application along the direction of A-A;

FIG. 12 shows a partially enlarged view at D in FIG.

11;

FIG. 13 shows a structural schematic diagram of a sealing ring provided in some embodiments of the present application;

FIG. 14 shows a structural schematic diagram of a current collecting end cover being connected to a first tab provided in some embodiments of the present application;

FIG. 15 shows a structural schematic diagram of a current collecting end cover being connected to a first tab provided in some other embodiments of the present application;

FIG. 16 shows a cross-sectional schematic diagram of a current collecting end cover provided in some embodiments of the present application;

FIG. 17 shows a structural schematic diagram of a current collecting end cover provided in some more embodiments of the present application; and

FIG. 18 shows a cross-sectional schematic diagram of a current collecting end cover provided in some more embodiments of the present application.

Description of reference numerals:

vehicle 1000;
battery 100, controller 200, motor 300;
box body 10, first portion 11, second portion 12;
battery cell 20, case 21, end wall 211, bent portion 212, connecting edge 2121, annular edge 2122, main body portion 213, welding portion 214, second paste mask layer 215, first paste mask layer 235, electrode assembly 22, tab 221, first tab 221A, second tab 221B, central hole 222, current collecting end cover 23, reinforcing rib 231, first connecting portion 232, tab connecting portion 2321, pressure relief portion 2322, scored groove 2323, central region 2324, second connecting portion 233, first protruding portion 2331, second protruding portion 2332, electrode terminal 24, second fusion joint portion 25, first fusion joint portion 26, sealing ring 27, first sealing body 271, second sealing body 272, third protruding portion 273.

**DETAILED DESCRIPTION**

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application. The terms used herein are intended only for the purpose of describing specific embodiments and are not intended to limit the present application. The terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the quantity, particular order, or primary and secondary relation of the technical features indicated. In the description of the embodiments of the present application, the meaning of "a plurality of" is two or more, unless otherwise explicitly and specifically defined.

Reference herein to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "a plurality of groups" refers to two or more (including two) groups, and "a plurality of sheets" refers to two or more (including two) sheets.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the description of the embodiments of the present application, unless otherwise expressly specified and limited, the technical terms "mount," "join," "connect," "fix," etc., should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. Those of ordinary skill in the art can understand the specific meanings of the above terms in the embodiments of the present application according to specific situations.

For a general battery cell, the electrode assembly needs to be electrically connected to the case so that the case can be used as an electrode lead-out pole that can be used to input or output electrical energy. In order to enable the case to be electrically connected to the electrode assembly within the battery cell in a convenient manner, a current collecting member is also provided within the case of the battery cell, where the current collecting member is located on a side of the electrode assembly that faces an end cover of the battery cell, the electrode assembly is electrically connected to the end cover through the current collecting member, and the end cover covers the opening in the case and is electrically connected to the case. In this way, the electrode assembly, the current collecting member, the end cover, and the case are sequentially connected to form a conductive path.

In this embodiment, an example assembly process of the battery cell is substantially as follows: an electrode assembly is placed in the case and a current collecting member is placed in the case and on a side of the electrode assembly; a laser penetrates the current collecting member from the side of the current collecting member opposite from the electrode assembly in a direction of extension of the central axis of the electrode assembly such that the current collecting member is weldedly connected to the tabs of the electrode assembly; an end cover is placed to cover the opening of the case; and a laser penetrates the end cover from the outside of the case in the direction of extension of the central axis of the electrode assembly, such that the end cover is weldedly connected to the current collecting end cover.

The inventors found through close study that in order to realize the welding of the current collecting member with the tabs and the case, it is often necessary to leave enough space at the end portion of the case of the battery for welded connection, and at the same time to provide an end cover to seal the opening of the case, which is conducive to avoiding leakage of the electrolyte. As a result, during battery assembly, the current collecting member needs to be welded first, and then the end cover and the case to be welded, which not only takes more man-hours, but also requires more welding dimensions to be reserved in the structure, which in turn affects the capacity of the battery to accommodate the electrode assembly.

To address this technical problem, the inventors conceived the idea of using the current collecting member as an end cover, and by electrically connecting the current collecting member separately to the tabs and the case to conduct the current from the tabs to the case and, at the same time, sealing the opening of the case, the two parts, the current collecting member and the end cover, can be replaced by one current collecting end cover, which reduces the man-hours of assembly and makes the structure of the battery simpler without the need to reserve large welding dimensions that affect the accommodation space for the electrodes.

Based on such an improvement idea, embodiments of the present application provide a battery cell including an electrode assembly, a case, and a current collecting end cover, where the electrode assembly has tabs, the case is used to accommodate the electrode assembly, and the current collecting end cover is accommodated in the case, and the current collecting end cover is conductively connected to the tabs and sealingly covers an opening of the case.

The battery cells disclosed in embodiments of the present application can be used in, but are not limited to, an electrical apparatus, such as a vehicle, a ship, or an aircraft. A battery cell, battery, or the like having the battery disclosed in the present application may be used to form a power supply system for such an electrical apparatus.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000 according to an embodiment of the present application is taken as an example for the description.

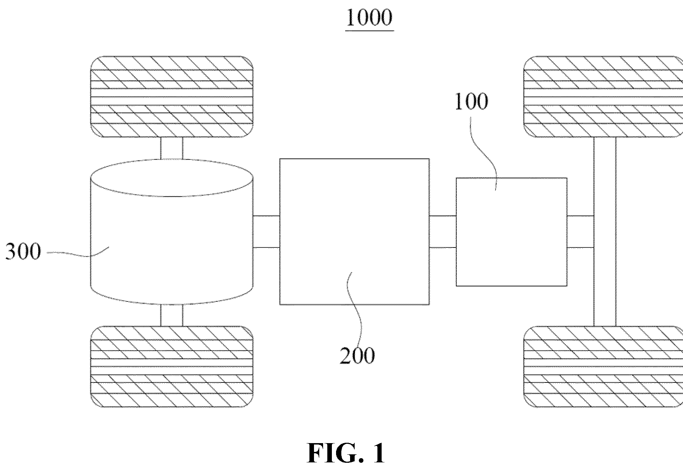

Referring to FIG. 1, FIG. 1 is a schematic structural diagram of a vehicle 1000 according to some embodiments of the present application. The vehicle 1000 may be a fuel vehicle, a gas vehicle, or a new energy vehicle, and the new energy vehicle may be an all-electric vehicle, a hybrid electric vehicle, an extended range electric vehicle, or the like. The vehicle 1000 is internally provided with a battery 100, and the battery 100 may be arranged at a bottom or head or tail of the vehicle 1000. The battery 100 may be used to supply power to the vehicle 1000. For example, the battery 100 may be used as an operating power supply of the vehicle 1000. The vehicle 1000 may further include a controller 200 and a motor 300. The controller 200 is used to control the battery 100 to power the motor 300, for example, to meet working power demands during starting, navigation and driving of the vehicle 1000.

In some embodiments of the present application, the battery 100 not only can serve as an operating power source of the vehicle 1000, but also can serve as a driving power source of the vehicle 1000, thus replacing or partially replacing fuel or natural gas to provide driving power for the vehicle 1000.

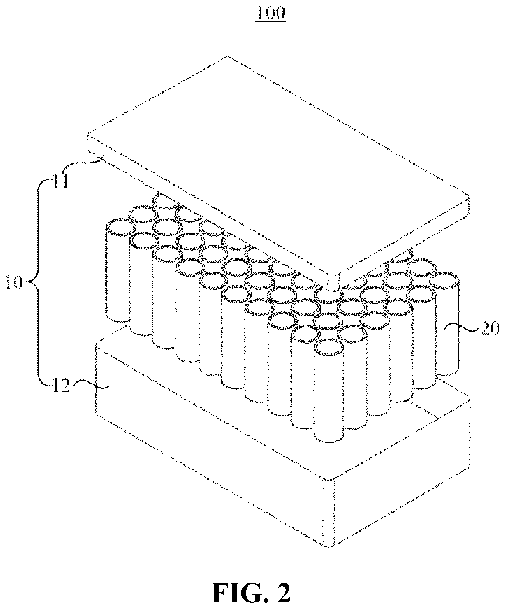

Referring to FIG. 2. FIG. 2 shows an exploded schematic diagram of a battery 100 provided in some embodiments of the present application. The battery 100 includes a box body 10 and battery cells 20, the battery cells 20 being accommodated within the box body 10. where the box body 10 is used to provide an accommodation space for the battery cell 20, and the box body 10 can be of various structures. In some embodiments, the box body 10 may comprise a first portion 11 and a second portion 12, the first portion 11 and the second portion 12 covering each other, and the first portion 11 and the second portion 12 together defining the accommodation space for accommodating the battery cell 20. The second portion 12 may be of a hollow structure with an opening at one end, and the first portion 11 may be of a plate-like structure, where the first portion 11 covers the opening side of the second portion 12 so that the first portion 11 and the second portion 12 together define the accommodation space; and the first portion 11 and the second portion 12 may each be of a hollow structure with an opening at one end, where the opening side of the first portion 11 is capped on the opening side of the second portion 12. Of course, the box body 10 formed by the first portion 11 and the second portion 12 may be of a variety of shapes, such as a cylinder, a rectangular solid, or the like.

In the battery 100, there may be a plurality of battery cells 20, and the plurality of battery cells 20 can be connected in series or in parallel or in a mixed connection, where the mixed connection means that the plurality of battery cells 20 are connected in both series and parallel. The plurality of battery cells 20 can be directly connected together in series or in parallel or in mixed connection, and then the whole composed of the plurality of battery cells 20 can be accommodated in the box body 10; and of course, the battery 100 may also be in the form of a battery module first formed by the plurality of battery cells 20 being connected in series or in parallel or in mixed connection, then multiple battery modules can be connected in series or in parallel or in mixed connection to form a whole, and accommodated in the box body 10. The battery 100 may further comprise other structures, for example, the battery 100 may further include a bus component for realizing electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cells 20 may be cylindrical, flat, rectangular, or in other shapes.

The specific structure of the battery cell 20 is described in detail below in conjunction with the accompanying drawings.

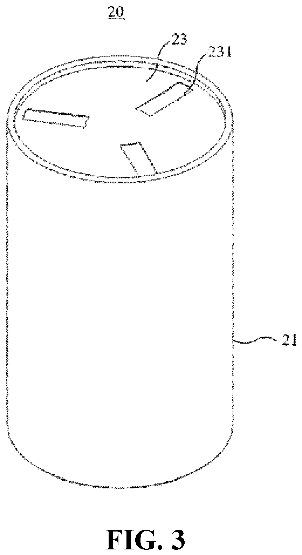

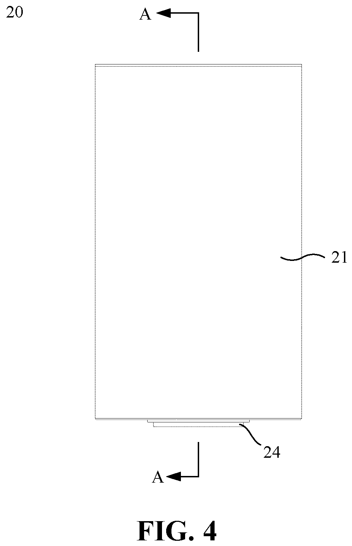

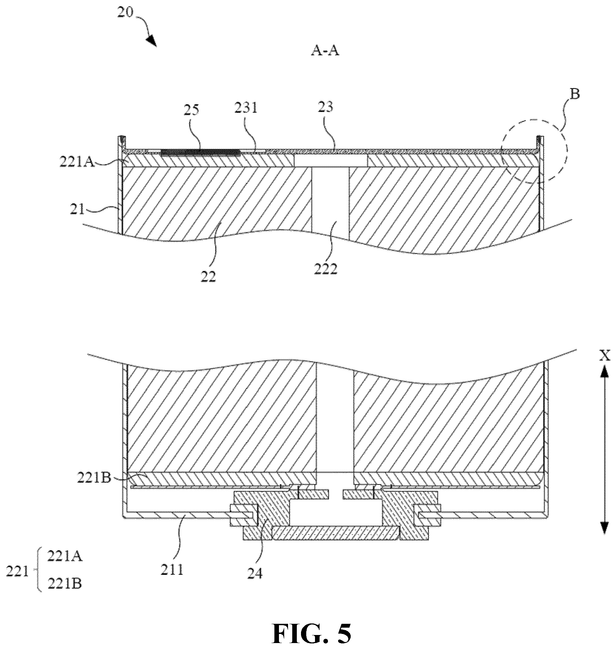

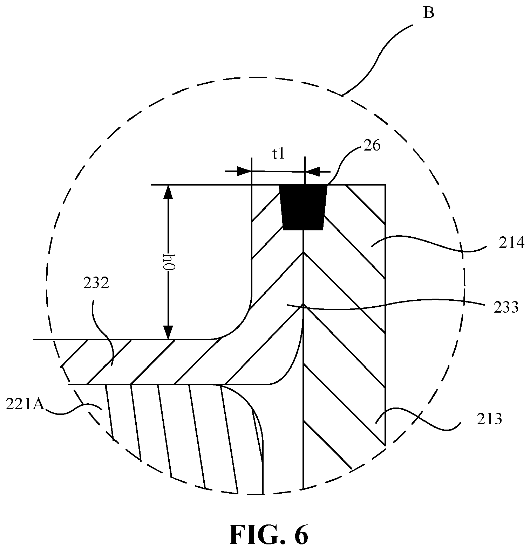

FIG. 3 shows a structural schematic diagram of a battery cell provided in some embodiments of the present application, FIG. 4 shows a main view of the battery cell shown in FIG. 3, FIG. 5 shows a cross-sectional schematic diagram of the battery cell shown in FIG. 4 along the direction of A-A, and FIG. 6 shows a partially enlarged view of the battery cell at B in FIG. 5. According to some embodiments of the present application, as shown with reference to FIGS. 3 to 6, the battery cell 20 refers to the smallest unit that makes up the battery 100, which battery cell 20 includes an electrode assembly 22, a case 21, and a current collecting end cover 23. The electrode assembly 22 has a tab 221, the tab 221 including a first tab 221A and a second tab 221B, the case 21 defines an accommodation space and an opening located at an end of the accommodation space, the accommodation space being used to accommodate the electrode assembly 22, and the current collecting end cover 23 is fixedly connected to the case 21, the current collecting end cover 23 sealingly covers the opening of the case 21, and the current collecting end cover 23 is electrically connected to the first tab 221A.

The case 21 is of a hollow structure with an accommodation space formed inside for accommodating the electrode assembly 22, the case 21 has an opening and an opening end face surrounding the opening, and the case 21 can be filled with an electrolyte inside. The shape and the size of the case 21 are compatible with the shape and the size of the electrode assembly 22, and for a cylindrical battery cell 20, both the electrode assembly 22 and the case 21 may be cylindrical, and for a square battery cell 20, both the electrode assembly 22 and the case 21 may be square. The material of the case 21 may be various, such as copper, iron, aluminum, stainless steel, aluminum alloy, or the like, and embodiments of the present application do not impose any special limitations thereon.

The electrode assembly 22 is a component in the battery cell 20 in which an electrochemical reaction occurs, and the electrode assembly 22 may include a body portion and a tab 221, the tab 221 extending from the body portion such that the tab 221 protrudes from an end portion of the body portion. The electrode assembly 22 may comprise a positive electrode plate, a negative electrode plate and a separator. The electrode assembly 22 may be of a wound structure formed by winding a positive electrode plate, a negative electrode plate, and a separator. The electrode assembly 22 may be of a laminated structure formed by a laminated arrangement of a positive electrode plate, a negative electrode plate, and a separator. The positive electrode plate includes a positive electrode current collector and a positive electrode active material layer coated on two opposite sides of the positive electrode current collector. The negative electrode plate may include a negative electrode current collector and a negative electrode active material layer coated on two opposite sides of the negative electrode current collector. The body portion is the portion of the electrode assembly 22 that corresponds to the region of the electrode plate coated with the active material layer, and the tab 221 is the portion of the electrode plate that is not coated with the active material layer.

The tab 221 may be divided into a first tab 221A and a second tab 221B, the first tab 221A being protrudingly connected to the first electrode plate, and the second tab 221B being protrudingly connected to the second electrode plate. Among them, the first tab 221A may be connected to the current collecting end cover 23 to realize the electrical connection between the current collecting end cover 23 and the case 21, and the second tab 221B may be electrically connected to the electrode terminals 24, while the electrode terminals 24 and the case 21 are insulated from each other, so that the case 21 and the electrode terminals 24 serve as the electrode lead-out poles on the battery cell 20 with different polarities for inputting or outputting electrical energy, respectively.

The first tab 221A and the second tab 221B may be located at the same end of the electrode assembly 22 or at different ends of the electrode assembly 22. One of the first tab 221A and the second tab 221B is a positive tab and the other is a negative tab. If the first tab is a positive tab and the second tab is a negative tab, the case 21 is a positive electrode lead-out pole and the electrode terminal 24 is a negative electrode lead-out pole; and if the first tab is a negative tab and the second tab is a positive tab, the case 21 is a negative electrode lead-out pole and the electrode terminal 24 is a positive electrode lead-out pole.

The current collecting end cover 23 may be made of a conductive material such as copper or iron. The current collecting end cover 23 is electrically connected to the first tab 221A and fixedly connected to the case 21, and the current collecting end cover 23 serves as an end cover to sealingly cover the opening of the case 21.

In this embodiment, by making the current collecting end cover 23 electrically connected to the first tab 221A and fixedly connected to the case 21 to sealingly cover the opening of the case 21, the current collecting end cover 23 can act as both the current collecting member and the sealing end cover and play the roles of current collection and of sealing, thus reducing the number of parts and the welding process, so as to contribute to the simplification of the structure of the battery cell 20 and to increase the space utilization efficiency in the case, thereby reducing the internal resistance of the battery cell 20.

In some embodiments, the current collecting end cover 23 is weldedly connected to the case 21 such that the current collecting end cover 23 is conductively connected to the case 21.

The current collecting end cover 23 is conductively connected to the case 21 by means of a welding connection, which may be by laser welding or ultrasonic welding. The shape and the size of the current collecting end cover 23 is adapted to the case 21, and conductive sealing is realized after the two are weldedly connected.

By means of welding, a conducive sealed connection between the current collecting end cover 23 and the case 21 can be realized, and the lead-out of the electrodes and the sealing of the case of the battery cell can be realized, thus simplifying the structure of the battery.

Referring to FIGS. 5 and 6, in some embodiments, the case 21 includes a main body portion 213 and a welding portion 214, the main body portion 213 surrounding an outer side of the electrode assembly 22, and the welding portion 214 being located at an end of the main body portion 213 close to the opening, and the current collecting end cover 23 being weldedly connected to the welding portion 214 to form a first fusion joint portion 26.

In this example, the main body portion 213 and the welding portion 214 are provided in sequence along the axial direction of the electrode assembly 22, and the welding portion 214 forms an opening of the case 21 by means of surrounding an end away from the main body portion 213. For the case 21 of a cylindrical shape, both the main body portion 213 and the welding portion 214 are in annular shapes.

By welding and fusing the current collecting end cover 23 with the welding portion 214 close to an opening end of the case 21 to form the first fusion joint portion 26, the internal resistance can be reduced while realizing a sealed connection, so as to realize a conductive connection, thereby simplifying the structure of the end cover of the battery.

According to some embodiments of the present application, the current collecting end cover 23 includes a first connecting portion 232 and a second connecting portion 233 that are connected, where the first connecting portion 232 is electrically connected to the first tab 221A; and the second connecting portion 233 is connected to the first connecting portion 232, and the second connecting portion 233 is welded to the welding portion 214 of the case 21 to form the first fusion joint portion 26.

The first connecting portion 232 on the current collecting end cover 23 is electrically connected to the first tab 221A, and the second connecting portion 233 is electrically connected to the case 21 to realize the electrical connection of the electrode assembly 22 with the case 21 via the current collecting end cover 23. The second connecting portion 233 is connected to an end of the first connecting portion 232 that is close to an inner side face of the case 21.

The shape of the first connecting portion 232 is adapted to the shapes of the case 21 and the electrode assembly 22, and for the case 21 of a cylindrical shape, the electrode assembly 22 is of a circular shape, and the first connecting portion 232 is correspondingly of a circular shape. The first connecting portion 232 and the second connecting portion 233 may be made into an integral piece by an integral molding process. This eliminates the assembly process of the first connecting portion 232 and the second connecting portion 233, and can improve the structural strength of the current collecting end cover 23 without increasing the cost. The second connecting portion 233 and the first connecting 232 may be coplanar, meaning that these two are located in the same plane and together form a flat plate-like current collecting end cover 23, or they may be non-coplanar, meaning that they are irregular shaped structures separately extending in different directions. For example, the second connecting portion 233 may be formed by bending the plate structure such that the edge of the plate structure is bent.

In this embodiment, by means of welding to the first tab 221A and the case 21 via the first connecting portion 232 and the second connecting portion 233, respectively, it is possible to effectively separate the weld of the current collecting end cover 23 with the first tab 221A from the weld of the current collecting end cover 23 with the case 21, so as to avoid an unfavorable effect caused by a laser being projected onto the connection position of the current collecting end cover 23 with the first tab 221A during the welding of the second connecting portion 233 with the case 21. Moreover, the current collecting end cover 23 can directly transmit the current from the electrode assembly 22 to the case 21, which is conducive to reducing the internal resistance of the battery cell 20.

According to some embodiments of the present application, the second connecting portion 233 encloses an outer edge of the first connecting portion 232 and protrudes in a direction away from the electrode assembly 22.

As shown in FIG. 6, the second connecting portion 233 is provided continuously along the outer edge of the first connecting portion 232 and protrudes relative to the surface of the first connecting portion 232, and the second connecting portion 233 is provided at an angle to the first connecting portion 232. The second connecting portion 233 may, for example, be perpendicular to the first connecting portion 232; or from an end connected to the first connecting portion 232 to the other end away from the first connecting portion 232, the second connecting portion 233 may be progressively closer to the central axis of the electrode assembly 22, which means that an acute angle is formed between the second connecting portion 233 and the first connecting portion 232; or from an end connected to the first connecting portion 232 to the other end away from the first connecting portion 232, the second connecting portion 233 may be gradually farther away from the central axis of the electrode assembly 22, which means that an obtuse angle is formed between the second connecting portion 233 and the first connecting portion 232.

The setting of the first connecting portion 232 and the second connecting portion 233 being not coplanar allows positions where the first fusion joint portion 26 formed by welding on the current collecting end cover 23 is connected to the first tab 211A to be separately located in different orientations, thereby avoiding mutual influences during welding. The second connecting portion 233 being protruding in a direction away from the electrode assembly 22 allows the first fusion joint portion 26 to be implemented in any way, such as by internal welding, external welding, or butt-welding, so as to adapt to different welding needs, which is helpful for ensuring the quality of the welding.

According to some embodiments of the present application, as shown in FIG. 6, an end face at a side of the second connecting portion 233 away from the first connecting portion 232 is flush with an end face at a side of the welding portion 214 away from the main body portion 213, so that the second connecting portion 233 and the welding portion 214 form the first fusion joint portion 26 by butt-welding at the flush end faces.

The end faces of the second connecting portion 233 and the welding portion 214 being flush means that the end faces of the two are located in the same plane so that the second connecting portion 233 and the welding portion 214 can be weldedly connected by means of butt-welding to form the first fusion joint portion 26. It is to be understood that, without affecting the butt-welding, situations where the end faces of the second connecting portion 233 and the welding portion 214 are not completely coplanar due to manufacturing precision or butt positioning should also fall within the scope of the end faces of the second connecting portion 233 and the welding portion 214 being flush in this embodiment.

During the butt-welding, there is sufficient space for the laser to be arranged outside the battery, which is conducive to improving the precision of the laser welding and thus the quality of the welding; at the same time, the first fusion joint portion 26 formed by means of butt-welding is located on the end faces of the second connecting portion 233 and the welding portion 214, which can reduce the length of the second connecting portion 233 that is fitted with the welding portion 214 in the axial direction of the electrode assembly 22, thereby reducing the amount of the occupied internal space of the case of the battery.

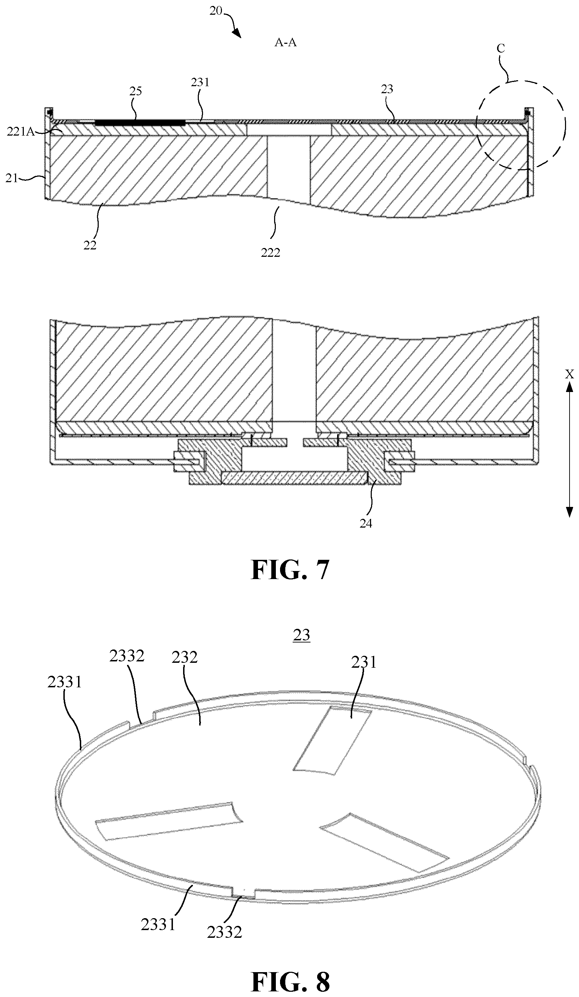

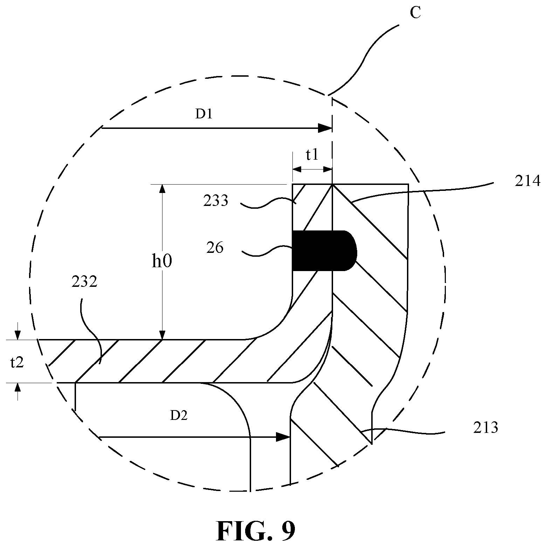

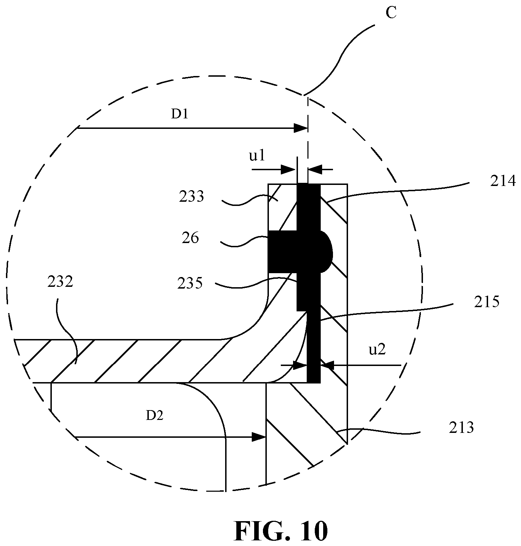

FIG. 7 shows a cross-sectional schematic diagram of a battery cell provided in some other embodiments of the present application along the direction of A-A, FIG. 8 shows a structural schematic diagram of a current collecting end cover 23 in some embodiments of the present application, FIG. 9 shows a partially enlarged view at C in FIG. 7, and FIG. 10 shows a partially enlarged view at C in FIG. 7 in some other embodiments. Referring to FIGS. 7-10, according to some embodiments of the present application, the first fusion joint portion 26 is configured to be formed in such a way that a laser penetrates the second connecting portion 233 in a direction intersecting an axis of the electrode assembly 22 and at least partially fuses the welding portion 214.

The laser penetrating the second connecting portion 233 in a direction intersecting the axis of the electrode assembly 22 and at least partially fusing the welding portion 214 means that the second connecting portion 233 and the welding portion 214 form the first fusion joint portion 26 by means of internal welding directed outwardly from the interior of the battery, in which case the first fusion joint portion 26 is located on a side wall of the second connecting portion 233. For example, the laser may be emitted in a direction perpendicular to the axial direction X of the electrode assembly 22 onto the second connecting portion 233, and the laser is projected onto the case 21 after penetrating the second connecting portion 233, so that the second connecting portion 233 is weldedly connected to the case 21 to form the first fusion joint portion 26.

In welding by means of the internal welding method, the emission direction of the laser is directed towards the outside of the battery, which can avoid damage to the electrodes caused by the laser being emitted towards the electrode assembly during welding, thus improving the safety of the welding operation.

According to some embodiments of the present application, the first fusion joint portion 26 does not penetrate the welding portion 214 of the case 21.

As the current collecting end cover needs to collect the current generated by the electrodes, a material with a high conductivity, such as copper, is usually used, whereas for the case, more consideration is given to the need for the structural strength, so carbon steel or stainless steel is usually used. Since different materials have different absorption rates and thermal expansion coefficients for lasers, the weld (i.e., the first fusion joint portion 26) of the second connecting portion 233 to the welding portion 214 generates large stress, which results in the first fusion joint portion 26 being susceptible to cracking. The parameters of the laser welding can be controlled during welding so that the first fusion joint portion 26 does not penetrate the welding portion 214, which is conducive to reducing cracking of the first fusion joint portion 26 formed by welding due to penetration of the welding portion 214, and thus the influence on the structural strength and the sealing performance of the battery.

According to some embodiments of the present application, as shown in FIG. 9, the second connecting portion 233 has a thickness of t1 in a direction perpendicular to an axis of the electrode assembly 22, and the second connecting portion has a height of h0 in an axial direction of the electrode assembly 22, t1 and h0 satisfying: $2 \leq h0/t1 \leq 6$.

As can be understood, there are a variety of scenarios for h0/t1 when h0/t1 < 2. One scenario is that $1 \leq h0/t1 < 2$, in which case the value of h0 is taken to be small, such that when the laser is projected along the axial direction X of the electrode assembly 22 to between the second connecting portion 233 and the inner side face of the case 21 to form the first fusion joint portion 26 by welding, the laser can be easily projected to the face of the first connecting portion 232 opposite from the electrode assembly 22, which results in partial fusion at the connection between the second connecting portion 233 and the first connecting portion 232, and due to the existence of a narrow slit between the outer side face at the connection in a chamfered structure and the inner side face of the case 21, the laser can be projected to the electrode assembly 22 through the narrow slit, resulting in the electrode assembly 22 being hit and damaged; and another scenario is that h0/t1 < 1, which means that h0 < t1, in which case the value of h0 takes a smaller value and there is a greater risk of the electrode assembly 22 being hit by the laser and damaged.

If h0/t1 > 6, it means that h0 > 6t1, in which case the value of h0 is too large, so that the second connecting portion 233 will excessively occupy the space inside the case 21 along the axial direction X of the electrode assembly 22, and then the number of electrode plates that can be accommodated inside the battery cell 20 will be small, which will result in the low energy density of the battery cell 20.

The inventors of the present application have found, after extensive experimental analysis, that the value of h0 is moderate when the ratio of h0 to t1, h0/t1, is greater than or equal to 2 and less than or equal to 6. In this case, if the laser is projected along the axial direction X of the electrode assembly 22 to between the second connecting portion 233 and the inner side face of the case 21 to form the first fusion joint portion 26 by welding, it is less likely that the connection between the second connecting portion 233 and the first connecting portion 232 is hit by the laser and fused. This in turn facilitates the reduction of the risk of damage to the electrode assembly 22 caused by the laser passing through the narrow slit with and the inner side face of the case 21 at the connection of the chamfered structure. At the same time, the space occupied by the second connecting portion 233 inside the case 21 along the axial direction X of the electrode assembly 22 is reduced as much as possible, which makes it possible to accommodate a larger number of electrode plates inside the battery cell 20 without changing the total height of the battery cell 20, which in turn facilitates the increase of the capacity for active materials in the battery cell 20, and thus can improve the energy density of the battery cell 20.

In some embodiments, h0/t1 may also be further designed as $3 \leq h0/t1 \leq 5$. The inventors of the present application have found, after extensive experimental analysis, that the value of h0 is more appropriate when the relationship between h0 and t1 satisfies $3 \leq h0/t1 \leq 5$, which can better balance the requirement of the laser welding for the size of the second connecting portion 233 along the axial direction X of the electrode assembly 22 and the energy density of the battery cell 20.

According to some embodiments of the present application, t1 of the second connecting portion 233 satisfies $0.1mm \leq t1 \leq 0.5mm$.

In some embodiments, t1 may be further designed as 0.2$mm \leq$ t1 $\leq$ 0.4mm. With respect to the thickness t2 of the first connecting portion 232, reference may be made to the thickness t1 of the second connecting portion 233. That is, the value range of t2 can be: 0.1$mm \leq$ t1 $\leq$ 0.5mm. In some embodiments, t2 may also be further designed to be 0.2$mm \leq$ t1 $\leq$ 0.4mm to allow the current collecting end cover 23 to better balance welding requirements, overcurrent capability, and strength requirements. In an example, the thickness t2 of the first connecting portion 232 and the thickness t1 of the second connecting portion 233 may be equal, which allows the current collecting end cover 23 to be machined and molded from a single component, thus reducing the manufacturing cost.

By selecting a proper thickness of the second connecting portion, the strength and the overcurrent capability of the current collecting end cover 23 can be balanced, thereby optimizing the internal connection structure of the battery.

According to some embodiments of the present application, an outer side face of the second connecting portion 233 is in an interference fit with an inner side face of the welding portion 214.

This embodiment may specifically apply to a solution in which the case 21 is cylindrical, the first connecting portion 232 is correspondingly circular, and the second connecting portion 233 is of an annular structure.

By the setting of the second connecting portion 233 and the case 21 in an interference fit, there is no gap between the outer side face of the second connecting portion 233 and the inner side face of the case 21 after the current collecting end cover 23 is mounted to the inside of the case 21, so that the current collecting end cover 23 and the case 21 can be tightly connected, which makes the connection reliable and, at the same time, can reduce false welding and leaky welding due to the gap being too large and damage to the electrode assembly due to the laser leaking out during the welding, which is conducive to guaranteeing the quality of the welding.

As shown in FIG. 8, according to some embodiments of the present application, the second connecting portion 233 includes a plurality of first protruding portions 2331 provided at intervals and protruding in a direction away from the electrode assembly 22, and second protruding portions 2332 located between two adjacent first protruding portions 2331, where a height of the second protruding portions 2332 is less than that of the first protruding portions 2331 in the axial direction of the electrode assembly 22; and the first protruding portions 2331 and the second protruding portions 2332 are separately weldedly connected to the welding portion to form parts of the first fusion joint portion 26.

The number of the second protruding portions 2332 is non-limiting, for example, there may be one or more second protruding portions 2332 provided. When a plurality of second protruding portions 2332 are provided, the second connecting portion 233 is divided into a plurality of arc-shaped connecting segments of different heights provided alternately, and the height of the second protruding portions 2332 is less than the height of the first protruding portions 2331, so that a gap can be formed between two adjacent first protruding portions 2331.

The second connecting portion 233 and the first connecting portion 232 can be connected by means of chamfering or chamfering round transition, and in order to avoid laser leakage during welding, the height of the second protruding portion 2332 can be set to be greater than the height of the chamfered rounded protruding surface of the first connecting portion.

This design can enable the first protruding portion 2331 to have a certain deformability during mounting, especially when the second connecting portion 233 is in an interference fit with the welding portion 214 of the case 21, which better balances the structural strength of the current collecting end cover and the feasibility of mounting and positioning.

According to some embodiments of the present application, a plurality of second protruding portions 2332 are uniformly distributed centered on a central axis of the electrode assembly 22.

It is to be understood that the plurality of second protruding portions 2332 are distributed at uniform intervals, and the first protruding portions 2331 provided alternately with the second protruding portions 2332 are also distributed at uniform intervals, such that parts of the first fusion joint portion 26 formed by welding the first protruding portions 2331 and the second protruding portions 2332 separately with the welding portion 214 are distributed uniformly along the circumferential direction. Such a structural design enables the first fusion joint portion 26 formed between the current collecting end cover 23 and the case 21 to maintain a symmetrical structure, which can enhance the impact resistance of the weld mark, thereby avoiding the rupture of the weld mark due to uneven force when impacted by an external force.

According to some embodiments of the present application, as shown in FIGS. 9 and 10, an inner diameter D2 of the main body portion 213 is smaller than an inner diameter D1 of the welding portion 214 so that a step face is formed at a connection of an inner surface of the main body portion 213 with an inner surface of the welding portion 214, with the current collecting end cover 23 abutting against the step face.

For the inner diameters of the main body portion 213 and the welding portion 214, there may be a direct abrupt change from D2 to D1 at the connection position, in which case a right-angled or nearly right-angled step face is formed, or there may be a gradual transitional change, such as a chamfered or rounded transitional connection.

The difference in inner diameters of the main body portion 213 and the welding portion 214 causes a step face to be formed at a connection of the two, and the current collecting end cover 23 can be positioned by means of this step face, thereby realizing more convenient butt positioning, thus improving the assembly efficiency.

According to some embodiments of the present application, as shown in FIG. 9, a wall thickness of the main body portion 213 is equal to a wall thickness of the welding portion 214.

When the wall thickness of the main body portion 213 is equal to the wall thickness of the welding portion 214, the fact that the inner diameter D1 of the welding portion 214 is greater than the inner diameter D2 of the main body portion 213 means that the welding portion 214 expands outwardly with respect to the main body portion 213 as a whole, i.e., the outer diameter of the welding portion 214 is also greater than the outer diameter of the main body portion 213, which makes it possible to maintain the strength of the case 21 while forming a step portion for better positioning of the current collecting end cover 23.

According to some embodiments of the present application, as shown in FIG. 10, an outer side face of the main body portion 213 is coplanar with an outer side face of the welding portion 214.

The outer side face of the main body portion 213 being coplanar with the outer side face of the welding portion 214 means that the outer side faces of the main body portion 213 and the welding portion 214 are flat surfaces and the outer diameters of the two are equal, and that when the inner diameter D2 of the main body portion 213 is smaller than the inner diameter D1 of the welding portion 214, it means that the thickness of the welding portion 214 is smaller than the thickness of the main body portion 213 and that it is the inner side portion of the welding portion 214 that is cut down, thereby forming a step face between the inner side faces of the welding portion 214 and the main body portion 213.

The outer side face of the main body portion 213 being coplanar with the outer side face of the welding portion 214 can maintain the consistency of the dimensions of the outer surfaces of the battery cells, which facilitates the combined assembly of a plurality of battery cells.

According to some embodiments of the present application, the inner diameter D1 of the welding portion 214 and the inner diameter D2 of the body portion 213 satisfy: D1 - D2 ≥ 0.1mm.

The inventors of the present application have found, after extensive experimental analysis, that the values of D1 and D2 can also be taken to satisfy, D1 - D2 ≥ 0.2mm, so that the step face formed between the welding portion and the main body portion has a certain width for placing the current collecting end cover 23, thereby providing the positioning for the mounting of the current collecting end cover 23, so as to increase the precision of mounting the current collecting end cover 23 and to increase the efficiency of assembly.

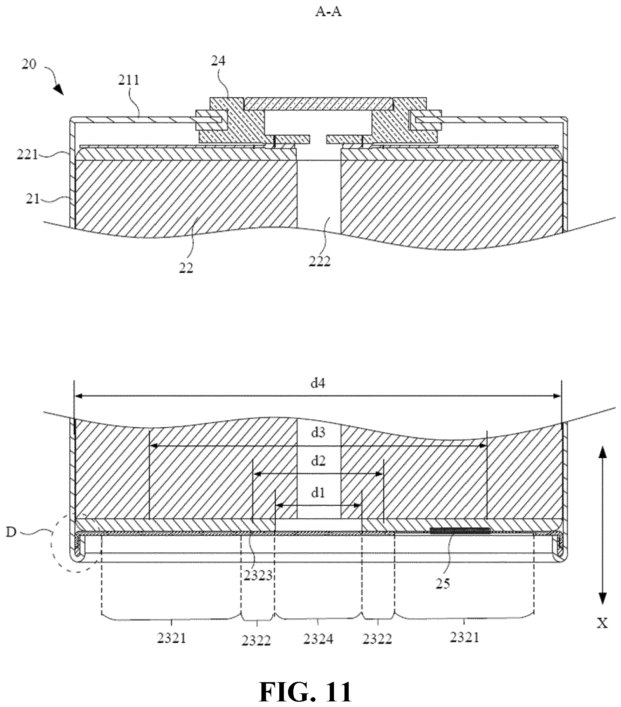

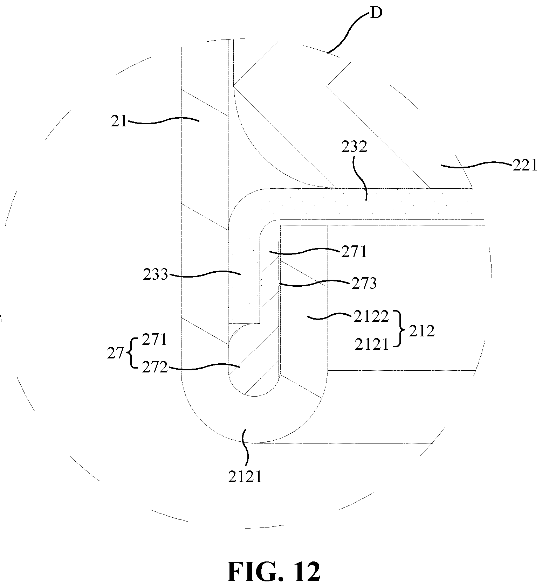

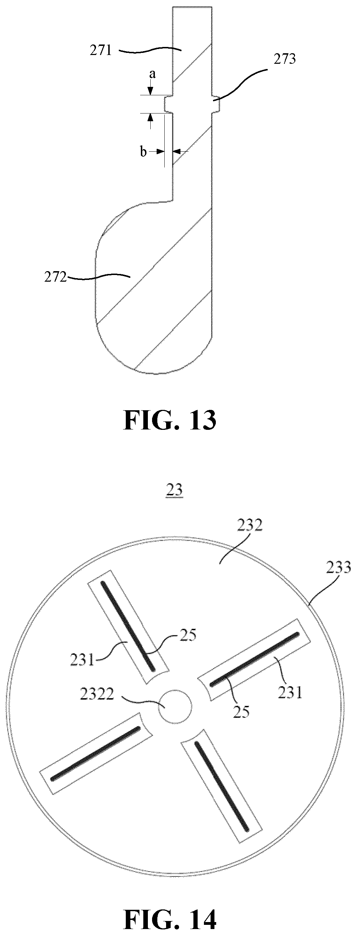

FIG. 11 shows a structural schematic diagram of a cross-sectional schematic diagram of a battery cell provided in some further embodiments of the present application along the direction of A-A, FIG. 12 shows a partially enlarged view at D in FIG. 11, and FIG. 13 shows a structural schematic diagram of a sealing member. According to some embodiments of the present application, as shown in FIGS. 11-13, the case 21 further includes a bent portion 212, the bent portion 212 being connected to an end of the welding portion 214 that is away from the main body portion 213 and bent towards an inner side of the welding portion 214 so as to form a gap between the bent portion 212 and the welding portion 214, with at least part of the second connecting portion 233 being located within the gap.

The bent portion 212 may, for example, be a flange structure formed by partially bending one end of the opening enclosed by the case 21 towards the interior of the case 21. In this example, during the assembly of the battery cell 20, after the current collecting end cover 23 is mounted into the case 21, the bent portion 212 can be formed at the opening position of the case 21 by means of bending the case 21, which makes molding simple.

By providing the bent portion 212, displacement of the current collecting end cover 23 can be limited so as to avoid disengagement of the current collecting end cover 23 from the case 21, thereby enabling the current collecting end cover 23 to be reliably connected to the case 21. Moreover, when the bent portion 212 is formed by bending the case 21, the implementation is made simple and the cost can be effectively reduced.

Referring to FIG. 12, according to some embodiments of the present application, the battery cell 20 further includes a sealing ring 27, the sealing ring 27 being located within the gap formed between the bent portion 212 and the welding portion 214, and the sealing ring 27 being at least partially sandwiched between the second connecting portion 233 and the bent portion 212.

The sealing ring 27 may be made of a metal material, or may be made of an elastic material such as rubber, plastic, or the like, and when the material forming the sealing ring 27 is plastic, it may specifically be polybutylene terephthalate (PBT), or soluble polytetrafluoroethylene

(PFA). The second connecting portion 233 and the bent portion 212 clamp the sealing ring 27, and the second connecting portion 233 is in sealed fitting with the bent portion 212.

In this way, for the battery cell 20 in which the current collecting end cover 23 is capable of isolating the cavity in the case 21 from the external environment, the sealing performance of the battery cell 20 can be further improved by providing the sealing ring 27, which is conducive to avoiding leakage of the electrolyte.

Referring to FIG. 12, according to some embodiments of the present application, the bent portion 212 includes a connecting edge 2121 and an annular edge 2122, the annular edge 2122 being connected to the welding portion 214 of the case 21 via the connecting edge 2121, with an end of the annular edge 2122 that is away from the connecting edge 2121 being close to the electrode assembly 22; and the sealing ring 27 includes a first sealing body 271 and a second sealing body 272 that are connected, the first sealing body 271 being sandwiched between the second connecting portion 233 and the annular edge 2122 and the second sealing body 272 being sandwiched between a side of the second connecting portion 233 opposite from the electrode assembly 22 and the connecting edge 2121.

Among them, the connecting edge 2121 may be a straight edge or an arc-shaped edge, which is not limited in this embodiment. The second sealing body 272 matches the connecting edge 2121.

Thus, the structural design of the sealing ring enables the second connecting portion 233 to realize sealed fitting with both the annular edge 2122 and the connecting edge 2121, which achieves a better sealing effect.

According to some embodiments of the present application, the first sealing body 271 includes a first surface facing the second connecting portion 233 and a second surface facing the annular edge, the first surface abutting against the second connecting portion 233, the second surface abutting against the annular edge 2122, and at least one of the first surface and the second surface being provided with a third protruding portion 273.

Schematically, the first surface is provided with a third protruding portion 273, or, alternatively, the second surface is provided with a third protruding portion 273. In some embodiments, both the first surface and the second surface may be provided with a third protruding portion 273. By means of the third protruding portion 273, the sealing performance of the surface fitting can be further improved, which is conducive to avoiding leakage of the electrolyte from the slit between the current collecting end cover 23 and the case 21.

Referring to FIG. 13, according to some embodiments of the present application, the third protruding portion 273 has a width of a in an axial direction of the electrode assembly 22 and a height of b along a direction perpendicular to the axial direction of the electrode assembly 22, a and b satisfying: $0.5mm \leq a \leq 2mm$, and $0.2mm \leq b \leq 0.5mm$.

In this embodiment, by preferably selecting the size of the third protruding portion 273, the clamping effect of the first sealing body 271 on the second connecting portion 233 and the annular edge 2122 can be enhanced, and thus the sealing effect of the first sealing body 271 can be improved.

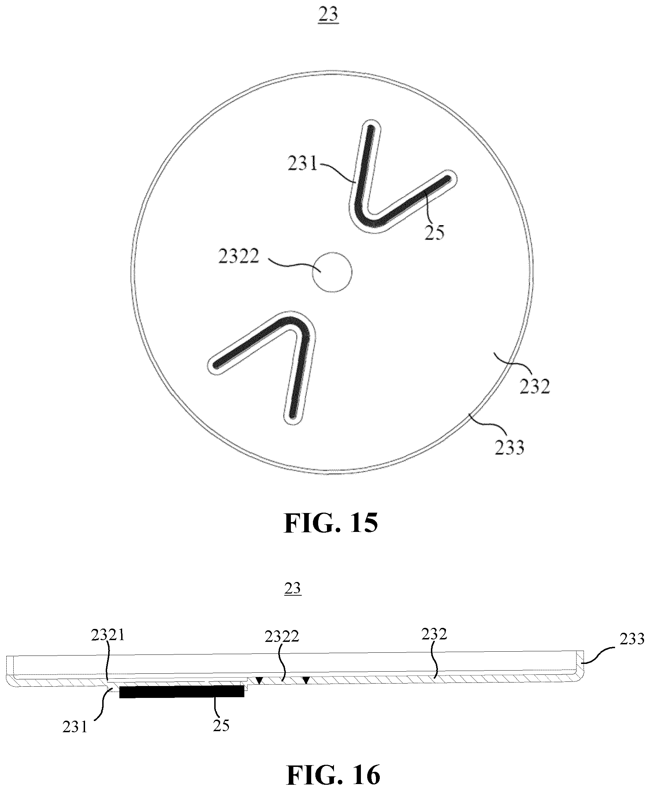

FIG. 14 shows a structural schematic diagram of a current collecting end cover being connected to a first tab in some embodiments of the present application, and FIG. 15 shows a structural schematic diagram of a current collecting end cover being connected to a first tab in some other embodiments of the present application. Referring to FIGS. 14-15, according to some embodiments of the present application, the first connecting portion 232 is welded to the first tab 221A to form the second fusion joint portion 25.

The conductive connection of the first connecting portion 232 to the first tab 221A is realized by means of welding, so as to collect the current from the electrode plates to the current collecting end cover 23 and conduct it to the case 21. The welding may be laser welding or ultrasonic welding, and in some examples, the second fusion joint portion 25 may be formed by emitting a laser along the axial direction of the electrode assembly and enabling it to penetrate the first connecting portion 232 and then fusing the first tab 221A, and finally performing curing.

The formation of the second fusion joint portion 25 by means of welding makes it possible to fixedly connect the current collecting end cover 23 to the electrode assembly 22, which improves the overall strength of the battery so that a stable conductive connection between the current collecting end cover 23 and the electrode assembly 22 can be realized even when faced with an impact of an external force.

According to some embodiments of the present application, the first connecting portion 232 includes a first side face facing the electrode assembly 22 and a second side face away from the electrode assembly 22, at least one of the first side face and the second side face being provided with at least one reinforcing rib 231 protruding from a surface on which it is located, with the reinforcing rib 231 being used to reinforce the current collecting end cover 23.

The material of the current collecting end cover 23 is usually a material with a high conductivity, such as copper, but its own strength is not very high, so it is prone to deformation under external force, which in turn affects the conductive connections of the current collecting end cover 23 with the first tab 221A and the case 21. The first connecting portion of the current collecting end cover 23 being provided with a reinforcing rib 231 protruding from a plane in which it is located can enhance the deformation resistance of the current collecting end cover 23. The reinforcing rib 231 may be provided on the first side face, or the second side face, or both sides at the same time, and there is no limit to the number of the reinforcing ribs 231, which may be one or more than one.

FIG. 16 shows a cross-sectional schematic diagram of a current collecting end cover of some embodiments of the present application. According to some embodiments of the present application, as shown in FIG. 16, at least part of the reinforcing rib 231 located on the first side face of the first connecting portion 232 that faces the electrode assembly 22 is weldedly connected to the first tab 221A to form the second fusion joint portion 25.

Since the reinforcing rib 231 protrudes from the surface on which it is located, when it is located on the first side face, it can abut against the first tab 221A when the current collecting end cover 23 is aligned with the electrode assembly 22, and the welding of the reinforcing rib 231 to the first tab 221A can reduce false welding due to the gap between the two, so as to ensure the quality of the welding of the second fusion joint portion 25, and at the same time, the second fusion joint portion 25 formed by welding can further enhance the strength of the current collecting end cover 23.

According to some embodiments of the present application, the reinforcing rib 231 for forming the second fusion joint portion 25 is a stamped groove, a side of the stamped groove opposite from the electrode assembly 22 being recessed into a second side face of the first connecting portion 232.

The stamped groove is a portion that is formed by stamping the plane of the first connecting portion and protrudes as a whole towards the surface at one side of the first connecting portion. The preparation of a stamped groove as a reinforcing rib on the first connecting portion 232 by means of stamping is a simple and cost-controlled process and does not increase the weight of the current collecting end cover, and the recess on the side opposite from the electrode assembly 22 can also be used to indicate a welding position for forming the second fusion joint portion 25, which facilitates simplifying the positioning of the welding.

According to some embodiments of the present application, the second fusion joint portion 25 is arranged at uniform intervals along a circumferential direction of a center of the first connecting portion 232.

The number of second fusion joint portions 25 formed by welding may be a plurality, and the exact number may be arranged according to actual needs. The plurality of second fusion joint portions 25 may be provided at uniform intervals around the center of the first connecting portion 232. For example, as shown in FIG. 14, four second fusion joint portions 25 are formed between the current collecting end cover 23 and the first tab 221A, and these four second fusion joint portions 25 are distributed uniformly around the central axis of the electrode assembly 22.

In this embodiment, the electrical energy of the electrode assembly 22 can be uniformly transmitted to all parts of the current collecting end cover 23, thereby further improving the uniformity of the transmission of the electrical energy, which suppresses an uncontrolled temperature rise due to excessive current flowing through partial positions of the current collecting end cover 23.

According to some embodiments of the present application, the second fusion joint portion 25 is of a plurality of radially extending spoke-like patterns or a plurality of crescent-like patterns.

Referring to FIG. 15, the plurality of strip-like second fusion joint portions 25 in this embodiment may be considered to radiate outwardly from the central position of the current collecting end cover 23. In this way, the second fusion joint portion 25 enables the current to be directed to a position of the current collecting end cover 23 close to the central region and enables the current to be directed to an edge of the current collecting end cover 23 close to the inner side face of the case 21, which enables the current collecting end cover 23 to conduct electrical energy uniformly.

According to some embodiments of the present application, please refer to FIG. 15, the second fusion joint portion 25 has an overall crescent-like pattern, and specifically may include a first segment, an arc segment, and a second segment connected in sequence, the first segment and the second segment being located on the side where the circular center of the arc segment is located, and the distance between the first segment and the second segment gradually increasing from the side close to the arc segment to the other side away from the arc segment. Among them, the circular center of the arc segment is located on the side of the arc segment away from the central axis of the electrode assembly 22.

In this way, the second fusion joint portion 25 enables the current to be directed to a central position of the current collecting end cover 23 and enables the current to be directed to an edge of the current collecting end cover 23 close to the inner side face of the case 21, which enables the current collecting end cover 23 to conduct electrical energy uniformly. Moreover, by designing the arc segment to connect the first segment and the second segment, the arc segment has a rounded transition, which can alleviate the occurrence of stress concentration as compared to the first segment and the second segment having a tip at the connection.

Referring to FIG. 16, according to some embodiments of the present application, the first connecting portion 232 includes a tab connecting portion 2321 and a pressure relief portion 2322, the tab connecting portion 2321 being weldedly connected to the first tab 221A to form a second fusion joint portion 25, and the pressure relief portion 2322 being configured to relieve an internal pressure of the battery cell when the internal pressure or temperature of the battery cell reaches a threshold.

The pressure relief portion 2322 may include a pressure relief function module having a pressure relief function, such as a pressure relief valve, and the pressure relief valve may be integrally fixedly connected to the first connecting portion 232 of the current collecting end cover 23, for example, by reserving a mounting hole on the first connecting portion 232, and then fixedly mounting the pressure relief valve in the reserved mounting hole in a welded manner. Since the tab connecting portion 2321 needs to be weldedly connected to the tab of the electrode assembly 22, the pressure relief portion 2322 needs to be staggered from the tab connecting portion 2321 when arranged so as to suppress unfavorable effects on the realization of the pressure relief function of the pressure relief portion 2322 due to the second fusion joint portion 25 formed from the welded connection.

In this way, when a phenomenon such as short-circuiting or overcharging occurs inside the battery cell 20, the battery cell 20 is prone to a sudden rise in the internal air pressure due to internal thermal runaway.

Through the design of the pressure relief mechanism, when the internal pressure of the battery cell 20 reaches the threshold, the pressure relief mechanism can play the function of pressure relief, so as to reduce the fire and explosion and other safety hazards that may easily occur during the use of the battery cell 20.

According to some embodiments of the present application, as shown in FIG. 16, the tab connecting portion 2321 surrounds an outer side of the pressure relief portion 2322.

After the tab connecting portion 2321 is connected to the tab, the current will be collected through the tab to the first connecting portion 232, and then conducted to the shell, and since the pressure relief portion 2322 needs to rupture when the temperature or pressure inside the battery cell 20 reaches a predetermined threshold to realize pressure relief, its structural design is inevitably different from that of the flat current collecting end cover, which may adversely affect the internal resistance of the end cover through which the current passes. The tab connecting portion 2321 is arranged on the outer side of the pressure relief portion 2322, so that the current of the electrode plate flows through the second connecting portion 233, the first fusion joint portion 26, and the case 21 after passing through the second fusion joint portion 25 without having to pass through the pressure relief portion 2322, which is of inconsistent thickness, thereby reducing the effect of the pressure relief portion 2322 on the internal resistance.

According to some embodiments of the present application, the tab connecting portion 2321 and the pressure relief portion 2322 are provided in an integrally molded manner.

The tab connecting portion 2321 is provided in an integrally molded manner directly with the pressure relief portion 2322, and the pressure relief function module may be provided directly on the surface of the pressure relief portion 2322. This can reduce the welded connection between the pressure relief portion 2322 and the tab connecting portion 2321, so that mutual interference between the welding operations of the two can be avoided, and man-hours can be saved, thereby improving the efficiency of production.

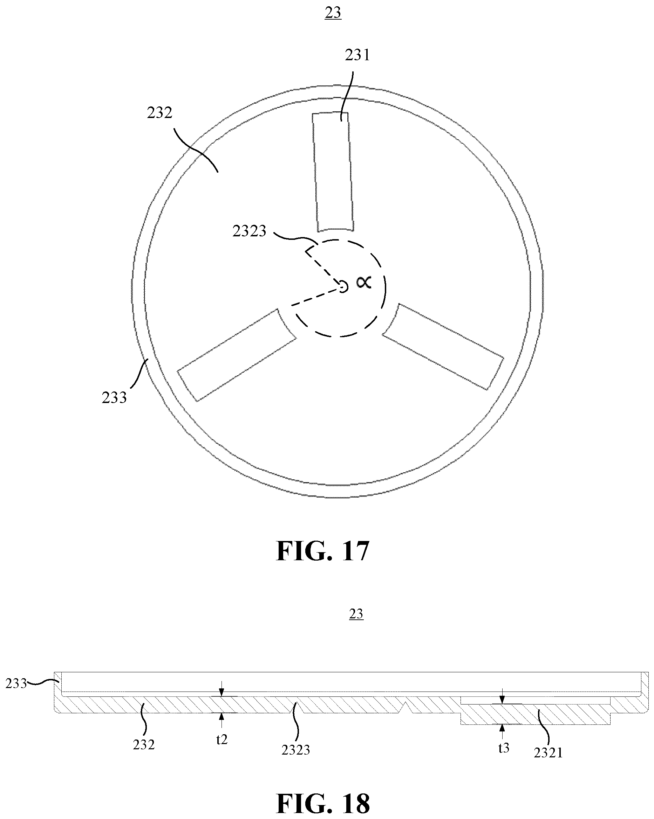

FIG. 17 shows a structural schematic diagram of a current collecting end cover provided in some further embodiments of the present application, and FIG. 18 shows a cross-sectional schematic diagram of a current collecting end cover provided in some more embodiments of the present application. According to some embodiments of the present application, as shown in FIGS. 17-18, the pressure relief portion 2322 includes a scored groove 2323, the scored groove 2323 being configured to crack along the scored groove 2323 to vent the internal pressure of the battery cell 20 when the internal pressure or temperature of the battery cell 20 reaches the threshold.

The scored groove 2323 is a groove recessed in the surface that is formed by machining the surface of the first connecting portion 232, so that the thickness of the position where the scored groove 2323 is located becomes smaller compared to the thickness of the other places, and the strength is weakened, so that when the battery cell 20 undergoes overcharging or internal short-circuiting, which causes irreversible changes of the positive electrode active material and the decomposition of the electrolyte, the battery cell 20 generates a large amount of gases, leading to a sharp rise of the air pressure inside the battery cell 20, and if the air pressure inside the battery cell 20 reaches a threshold, the air pressure first impacts the part of the first connecting portion 232 that is provided with the scored groove 2323, causing the first connecting portion 232 to crack along the scored groove 2323, and the gases inside the battery cell 20 are released to the outside of the battery cell 20 to vent the air pressure of the battery cell 20, so as to help maintain the safety of the battery cell 20.

Pressure relief is made easier by providing scored grooves on the surface, which eliminates the need for unnecessary welded connections and does not sacrifice the weight and space of the battery.

According to some embodiments of the present application, the scored groove 2323 is located on the surface of the first connecting portion 232 that faces the first side face of the electrode assembly 22.

When the material of the current collecting end cover 23 is copper, its outer surface will be oxidized or corroded by contact with the outside world, and the position of the groove where the scored portion is located, if oxidized or corroded, will have an influence on the set threshold for occurrence of rupture, rendering failure of the pressure relief function.

In this embodiment, the scored groove 2323 is arranged on the first side face of the first connecting portion 232 that faces the electrode assembly 22, so that the scored groove is located in the interior of the battery cell 22, so as to suppress failure of the pressure relief function due to oxidation or corrosion.

According to some embodiments of the present application, the scored groove 2323 is an annular groove centered on a center of the first connecting portion 232.

It can be understood that the scored groove 2323 may be a closed annular groove or a non-closed annular groove, such as a circular arc.

The scored groove 2323 with a regular pattern can alleviate inconsistent pressure decay across the scored groove, which is more conducive to setting and controlling the pressure or temperature threshold for pressure relief.

Referring to FIG. 17, according to some embodiments of the present application, a central angle $\alpha$ corresponding to the scored groove has a value range of: $270° \leq \alpha \leq 330°$.

By selecting a suitable central angle, it can be better adapted to the material and thickness of the current collecting end cover as well as the set pressure relief threshold, thus better satisfying the pressure relief requirements.

Referring to FIG. 11, according to some embodiments of the present application, the first connecting portion 232 further includes a central region 2324, the central region 2324 being a region of projection of a central hole of the electrode assembly 22 on the first connecting portion 232; and the scored groove 2323 is located at the periphery of the central region 2324.

The central region 2324 corresponds to the central hole of the electrode assembly 22, and the closer the position of the scored groove 2323 is to the center, the more difficult it is to control its pressure relief threshold. Therefore, when performing the position setting, the central region 2324, the scored groove 2323, and the tab connecting portion 2321 are set sequentially from the center of the first connecting portion 232 outwardly, so that the scored groove 2323 is located at the periphery of the central region 2324 and at the inner side of the tab connecting portion 2321, thereby avoiding the tab connecting portion and the center hole, so as to better safeguard the realization of the pressure relief function.

According to some embodiments of the present application, the central region 2324 is a circular region and the scored groove is an annular groove centered on a center of the first connecting portion, a diameter of the central region 2324 being $d1$; and a minimum diameter of the scored groove 2323 being $d2$, where $d2/d1 \leq 4$.

The scored groove 2323 is a groove having a certain width, and limiting the minimum diameter of the scored groove 2323 to be larger than the diameter of the central region 2324 can ensure that the scored groove 2323 is located outside of the central region, so that when an abnormal condition occurs within the electrode assembly and gas is generated, it is easier to converge through the central hole and apply pressure to the scored groove 2323 on the end cover 23 to cause the scored groove 2323 to crack open and release the pressure upon satisfying the preset condition.

According to some embodiments of the present application, the tab connecting portion 2321 is provided with at least one stamped groove that is weldedly connected to the first tab 221A to form the second fusion joint portion 25, the scored groove 2323 being located between the tab connecting portion 2321 and the central region 2324.

The groove of the scored groove 2323 will make the thickness of the position where it is located thin, and thus is not suitable to be arranged on the path through which the current flows on the current collecting end cover; at the same time, the surface of the tab connecting portion 2321 will be provided with a stamped groove connected to the tab, and thus when the scored groove 2323 is at the periphery of the tab connecting portion 2321, the stamped groove and the welding will both have an influence on the scored groove, which will result in the attenuation or inconsistency of the bursting pressure.

Therefore, arranging the scored groove 2323 between the tab connecting portion 2321 and the central region 2324 can suppress an unfavorable influence on the current collecting effect of the current collecting end cover, and also facilitate the realization of the pressure relief function of the scored groove.

According to some embodiments of the present application, the first connecting portion 232 is circular, the maximum diameter of the second fusion joint portion 25 is $d3$, and the diameter of the first connecting portion is $d4$, and $d3 < d4$.

The maximum diameter $d3$ of the second fusion joint portion 25 refers to the diameter of a circle centered on the center of the first connecting portion 232 and having a radius of the distance of the end point of the second fusion joint portion 25 that is farthest from the center of the first connecting portion 232 relative to the center of the first connecting portion 232. The maximum diameter of the second fusion joint portion 25 being smaller than the diameter of the first connecting portion 232 makes it possible to space the position of the second fusion joint portion 25 from the case 21 and the first fusion joint portion 26, thereby avoiding affecting the quality of welding due to mutual influence during the welding.

According to some embodiments of the present application, the central region 2324 is a circular region centered on the center of the first connecting portion 232, and the scored groove 2323 is an annular groove centered on the center of the first connecting portion 232, and the central region 2324 has a diameter of $d1$; the scored groove has a minimum diameter of $d2$, the second fusion joint portion has a maximum diameter of $d3$ and the first connecting portion 232 has a diameter of $d4$. The applicant has found, after research, that the internal resistance of the battery is small when the dimensions of the current collecting end cover 23 satisfy:

$$0.8 \leq \frac{d4^2 - d3^2}{d2^2 - d1^2} \leq 1.2$$

According to some embodiments of the present application, as shown in FIG. 18, the tab connecting portion 2321 of the first connecting portion 232 has a minimum thickness of $t3$ along an axial direction of the electrode assembly 22, a material of the current collecting end cover 23 has a Young's modulus of $E$, and the electrode assembly 22 has a weight of $W$, where

$$t3 \times E/W \geq 7000\,\text{mm}^{-1}$$

Since the current collecting end cover 23 is located at the opening end of the case of the battery, it needs to bear the weight of the electrode assembly 22 inside the case 21, which places certain requirements on the strength of the current collecting end cover 23. By setting the above parameters of the current collecting end cover 23, the load-bearing capability of the current collecting end cover 23 can be ensured to alleviate deformation or even breakage under the gravity of the electrode assembly 22.

It is worth noting that when the current collecting end cover 23 is made of a single material, the Young's modulus E of the material forming the current collecting end cover 23 can be found according to existing standards and specifications, whereas when the current collecting end cover 23 is made of a plurality of materials, the Young's modulus of the material forming the current collecting end cover 23 can be determined based on tests.

Illustratively, the test step for the Young's modulus E may include:

i. cutting the current collecting end cover into metal strips to obtain a test sample that has a cross-sectional area of S0;
ii. applying a pressure F to the test sample using a testing machine to deform the test sample, and recording the amount of deformation $\Delta L_{e1}$; and
iii. calculating the Young's modulus E according to the applied pressure F and the amount of deformation $\Delta L$.

Among them, the specific implementation of calculating the Young's modulus E according to the applied pressure and the amount of deformation may be as follows: the pressure and the corresponding amount of deformation are formed into a deformation-force curve, and two points are taken on the curve, and the Young's modulus E is calculated according to the difference in pressure and the difference in amount of deformation between the two points, and the cross-sectional area S0.

A stamped groove may be formed on the tab connecting portion 2321 by stamping the first connecting portion 232 for use in a welded connection with the electrode assembly, and the thickness of the tab connecting portion 2321 will be thinned due to stretching during the stamping process, and the minimum thickness of the tab connecting portion 2321 is the minimum thickness of the current collecting end cover 23 except for the scored groove, and it can be used in a strength calibration to more accurately reflect the strength of the current collecting end cover.

According to some embodiments of the present application, as shown in FIG. 10, at least one of two opposing surfaces of the case 21 and the current collecting end cover 23 is provided with a paste mask layer.

Different materials have different melting points, laser absorption rates and thermal expansion coefficients. When the current collecting end cover 23 is laser welded to the case 21, an effective weld mark may not be formed or cracks may appear due to the large difference in materials, and providing a paste mask layer on the surface of the weld can assist welding to improve the quality of the welding. The two opposing surfaces of the case 21 and the collecting end cover 23 refer to two surfaces that are close to each other when they are connected. The paste mask layer can be formed on the surfaces of the case 21 and/or the current collecting end cover 23 by means of deposition or electroplating.

In some examples, the material of the first material layer is copper and the material of the second material layer is carbon steel. The material of the paste mask layer is nickel.

The paste mask layers may be formed by forming nickel-plated layers on the surfaces of the current collecting end cover 23 and the case 21 by means of electroplating. It can be understood that the paste mask layers may be plated on the entire surfaces of the current collecting end cover 23 and the case 21 or, according to the specific position of the welded connection, the surfaces of the region where the welding position is located may be plated with the paste mask layers to facilitate welding.

According to some embodiments of the present application, as shown in FIG. 10, a surface of the current collecting end cover 23 that faces the case 21 is provided with a first paste mask layer 235, and a surface of the case 21 that faces the current collecting end cover 23 is provided with a second paste mask layer 215, the first paste mask layer 235 having a thickness of $u1$, and the second paste mask layer 215 having a thickness of $u2$, where $1um \leq u1 + u2 \leq 9um$. In some examples, $u1$ and $u2$ can also satisfy $2um \leq u1 + u2 \leq 8um$.

In this embodiment, by reasonably setting the thickness of the paste mask layers, it is possible to control the weight of the end cover and the case while assisting the welding, thus reducing unnecessary weight loss.

Referring to FIG. 5, according to some embodiments of the present application, the electrode assembly 22 further includes a second tab 221B having a polarity different from that of the first tab 221A; and the battery cell further includes electrode terminals 24, the electrode terminals 24 being located at an end of the case 21 that is away from the opening and electrically connected to the second tab 221B.

The first tab 221A and the second tab 221B are separately located on different sides of the electrode assembly 22, where the first tab 221A is conductively connected to the case 21 via the current collecting end cover 23, and the second tab 221B is electrically connected to the electrode terminal 24, with the electrode terminal protruding out of the case 21 and being provided insulated from the case 21.

The structure of the battery cell 20 of the present application is illustrated below by a specific embodiment using a cylindrical battery cell 20 as an example.

FIGS. 3 through 18 show a battery cell 20, the battery cell 20 including a case 21, an electrode assembly 22, a current collecting end cover 23, and electrode terminals 24. Among them, the case 21 has an opening and an opening end face surrounding the opening, and the case 21 has an end wall 211 directly facing the opening, the end wall 211 having the electrode terminals 24 mounted thereon. The electrode assembly 22 is provided in the case 21, the electrode assembly 22 is of a cylindrical shape, and the electrode assembly 22 includes a first tab 221A and a second tab 221B, the first tab 221A and the second tab 221B being located on different sides of the electrode assembly 22, and the second tab being electrically connected to the electrode terminals 24.

The current collecting end cover 23 is provided in the case 21 and closes the opening of the case 21, and the current collecting end cover 23 includes a first connecting portion 232 and a second connecting portion 233, where the first connecting portion 232 is of a flat plate structure and the second connecting portion 233 is connected to the first connecting portion 232 and is of an annular structure, the first connecting portion 232 is welded to the first tab 221A and forms a second fusion joint portion 25, and the second connecting portion 233 is welded to an inner side face of the case 21 and forms a first fusion joint portion 26. Among them, there are formed 3, 4 or 6 etc. second fusion joint portions 25, the plurality of second fusion joint portions 25 being uniformly distributed around a central axis of the electrode assembly 22.

The first connecting portion 232 is provided with a central region 2324, a pressure relief portion 2322, and a tab connecting portion 2321 in sequence from the center outwardly, where the central region 2324 is a region of projection of a central hole of the electrode assembly 22 on the first connecting portion, the pressure relief portion 2322 includes a circular scored groove 2323, and the tab connecting portion 2321 includes a plurality of reinforcing ribs 231. In some embodiments, the reinforcing rib 231 is a stamped groove protruding towards the electrode assembly 22, and the stamped groove is welded to the first tab 221A of the electrode assembly to form the second fusion joint portion 25, and the scored groove 2323 is located between the central region 2324 and the tab connecting portion 2321 and avoids the second fusion joint portion 25.

The connection between the first connecting portion 232 and the second connecting portion 233 may be formed with a rounded transition such that this connection is formed as a chamfered corner. The outer diameter of the annular second connecting portion 233 is larger than the inner diameter of the case 21 such that the second connecting portion 233 is in an interference fit with the cavity of the case 21 and the second connecting portion 233 is provided with a second protruding portion 2332, a height dimension of X of the second protruding portion 2332 along the axial direction of the electrode assembly 22 being less than h0.

The second connecting portion 233 is welded to the inner side face of the case 21 and forms the first fusion joint portion 26, and the first fusion joint portion 26 is an annular structure that extends along a circumferential direction of the inner side face of the case 21, such that the second connecting portion 233 is sealedly connected to the case 21 so as to block off the opening of the case 21 to seal the cavity within the case 21.

The end of the case 21 that is located at the opening may also be provided with a bent portion 212, where the bent portion 212 is bent to extend towards the electrode assembly 22, and a part of the second connecting portion 233 extends into a gap defined between the case 21 and the bent portion 212, and a sealing ring 27 is also mounted in the gap.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:

   an electrode assembly having a first tab;
   a case defining an accommodation space and an opening located at one end of the accommodation space, the accommodation space being used to accommodate the electrode assembly; and
   a current collecting end cover fixedly connected to the case, the current collecting end cover sealingly covering the opening in the case, and the current collecting end cover being electrically connected to the first tab.

2. The battery cell according to claim 1, wherein the current collecting end cover is weldedly connected to the case such that the current collecting end cover is conductively connected to the case.

3. The battery cell according to claim 1 or 2, wherein the case comprises a main body portion and a welding portion, the main body portion surrounding an outer side of the electrode assembly, and the welding portion being located at an end of the main body portion close to the opening, and the current collecting end cover being weldedly connected to the welding portion to form a first fusion joint portion.

4. The battery cell according to claim 3, wherein the current collecting end cover comprises:

   a first connecting portion electrically connected to the first tab; and
   a second connecting portion connected to the first connecting portion, the second connecting portion being welded to the welding portion of the case to form the first fusion joint portion.

5. The battery cell according to claim 4, wherein the second connecting portion encloses an outer edge of the first connecting portion and protrudes in a direction away from the electrode assembly.

6. The battery cell according to claim 5, wherein an end face at a side of the second connecting portion away from the first connecting portion is flush with an end face at a side of the welding portion away from the main body portion, so that the second connecting portion and the welding portion form the first fusion joint portion by butt-welding at the flush end faces.

7. The battery cell according to claim 5, wherein the first fusion joint portion is configured so that a laser penetrates the second connecting portion in a direction intersecting an axis of the electrode assembly and at least partially fuses the welding portion to form the first fusion joint portion.

8. The battery cell according to claim 7, wherein the first fusion joint portion does not penetrate the welding portion.

9. The battery cell according to claim 7 or 8, wherein the second connecting portion has a thickness of t1 in a direction perpendicular to a central axis of the electrode assembly, and the second connecting portion has a height of h0 in an axial direction of the electrode assembly, t1 and h0 satisfying: $2 \leq h0/t1 \leq 6$.

10. The battery cell according to any one of claims 7 to 9, wherein the second connecting portion has a thickness of t1 in the direction perpendicular to the central axis of the electrode assembly, t1 satisfying $0.1mm \leq t1 \leq 0.5mm$.

11. The battery cell according to any one of claims 4 to 10, wherein an outer side face of the second connecting portion is in an interference fit with an inner side face of the welding portion.

12. The battery cell according to claim 11, wherein the second connecting portion comprises a plurality of first protruding portions provided at intervals and protruding in the direction away from the electrode assembly, and second protruding portions located between two adjacent first protruding portions, wherein a height of the second protruding portions is less than that of the first protruding portions in the axial direction of the electrode assembly; and the first protruding portions and the second protruding portions are separately weldedly connected to the welding portion to form part of the first fusion joint portion.

13. The battery cell according to claim 12, wherein a plurality of said second protruding portions are uniformly distributed centered on a central axis of the electrode assembly.

14. The battery cell according to any one of claims 4 to 13, wherein an inner diameter of the main body portion is smaller than an inner diameter of the welding portion so that a step face is formed at a connection of an inner surface of the main body portion with an inner surface of the welding portion, the current collecting end cover abutting against the step face.

15. The battery cell according to claim 14, wherein a wall thickness of the main body portion is equal to a wall thickness of the welding portion.

16. The battery cell according to claim 14, wherein an outer side face of the main body portion is coplanar with an outer side face of the welding portion.

17. The battery cell according to any one of claims 13 to 16, wherein a difference between an inner diameter of the welding portion and an inner diameter of the main body portion is greater than or equal to 0.1 mm.

18. The battery cell according to any one of claims 4 to 17, wherein the case further comprises a bent portion, the bent portion being connected to an end of the welding portion that is away from the main body portion and bent towards an inner side of the welding portion so as to form a gap between the bent portion and the welding portion, with at least part of the second connecting portion being located within the gap.

19. The battery cell according to claim 18, wherein the battery cell further comprises a sealing ring, the sealing ring being located within the gap, and the sealing ring being at least partially sandwiched between the second connecting portion and the bent portion.

20. The battery cell according to claim 19, wherein the bent portion comprises a connecting edge and an annular edge, the annular edge being connected to the welding portion of the case via the connecting edge, with an end of the annular edge that is away from the connecting edge being close to the electrode assembly; and

the sealing ring comprises a first sealing body and a second sealing body that are connected, the first sealing body being sandwiched between the second connecting portion and the annular edge and the second sealing body being sandwiched between a side of the second connecting portion opposite from the electrode assembly and the connecting edge.

21. The battery cell according to claim 20, wherein the first sealing body comprises a first surface facing the second connecting portion and a second surface facing the annular edge, at least one of the first surface and the second surface being provided with a third protruding portion.

22. The battery cell according to claim 21, wherein the third protruding portion has a width of a along the axial direction of the electrode assembly and a height of b along a direction perpendicular to the axial direction of the electrode assembly, a and b satisfying: 0.5mm ≤ a ≤ 2mm, and 0.2mm ≤ b ≤ 0.5mm.

23. The battery cell according to any one of claims 4 to 22, wherein the first connecting portion is welded to the first tab to form a second fusion joint portion.

24. The battery cell according to claim 23, wherein the first connecting portion comprises a first side face facing the electrode assembly and a second side face away from the electrode assembly, at least one of the first side face and the second side face being provided with at least one reinforcing rib protruding from a surface on which it is located, with the reinforcing rib being used to reinforce the current collecting end cover.

25. The battery cell according to claim 24, wherein at least part of the reinforcing rib located on the first side face is weldedly connected to the first tab to form the second fusion joint portion.

26. The battery cell according to claim 25, wherein the reinforcing rib for forming the second fusion joint portion is a stamped groove, a side of the stamped groove opposite from the electrode assembly being recessed into a second side face of the first connecting portion.

27. The battery cell according to any one of claims 23 to 26, wherein the second fusion joint portion is arranged at uniform intervals along a circumferential direction of a center of the first connecting portion.

28. The battery cell according to claim 27, wherein the second fusion joint portion is of a plurality of radially extending spoke-like patterns or a plurality of crescent-like patterns.

29. The battery cell according to any one of claims 4 to 28, wherein the first connecting portion comprises a tab connecting portion and a pressure relief portion, the tab connecting portion being weldedly connected to the first tab to form a second fusion joint portion, and the pressure relief portion being configured to relieve an internal pressure of the battery cell when the internal pressure or temperature of the battery cell reaches a threshold.

30. The battery cell according to claim 29, wherein the tab connecting portion surrounds an outer side of the pressure relief portion.

31. The battery cell according to claim 29, wherein the tab connecting portion and the pressure relief portion are provided in an integrally molded manner.

32. The battery cell according to any one of claims 29 to 31, wherein the pressure relief portion comprises a scored groove, the scored groove being configured to crack along the scored groove to vent the internal pressure of the battery cell when the internal pressure or temperature of the battery cell reaches the threshold.

33. The battery cell according to claim 32, wherein the scored groove is located on a surface of the first connecting member that faces the electrode assembly.

34. The battery cell according to claim 32 or 33, wherein the scored groove is an annular groove centered on a center of the first connecting portion.

35. The battery cell according to claim 34, wherein a central angle $\propto$ corresponding to the scored groove has a value range of: 270° ≤∝≤ 330°.

36. The battery cell according to any one of claims 32 to 35, wherein the first connecting portion further comprises a central region, the central region being a region of projection of a central hole of the electrode assembly on the first connecting portion; and

the scored groove is located at the periphery of the central region.

37. The battery cell according to claim 36, wherein the central region is a circular region, and the scored groove is an annular groove centered on a center of the first connecting portion,

the central region having a diameter of $d1$; and the scored groove having a minimum diameter of d2,

wherein $d2/d1 \leq 4$.

**38.** The battery cell according to claim 36 or 37, wherein the tab connecting portion is provided with at least one stamped groove that is weldedly connected to the first tab to form the second fusion joint portion, the scored groove being located between the tab connecting portion and the central region.

**39.** The battery cell according to claim 38, wherein the first connecting portion is circular, the second fusion joint portion has a maximum diameter of d3, and the first connecting portion has a diameter of d4, wherein the maximum diameter of the second fusion joint portion is a diameter of a circle in which an end point of the second fusion joint portion that is farthest from the center of the first connecting portion is located, and d3 < d4.

**40.** The battery cell according to claim 39, wherein the central region is a circular region centered on the center of the first connecting portion, and the scored groove is an annular groove centered on the center of the first connecting portion, and
the central region has a diameter of $d1$; the scored groove has a diameter of d2, the fusion joint region has an outer diameter of d3, and the first connecting portion has a diameter of d4, which satisfy:

$$0.8 \leq \frac{d4^2 - d3^2}{d2^2 - d1^2} \leq 1.2 \;.$$

**41.** The battery cell according to any one of claims 29 to 40, wherein the tab connecting portion of the first connecting portion has a minimum thickness of t3 along the axial direction of the electrode assembly, a material of the current collecting end cover has a Young's modulus of $E$, and the electrode assembly has a weight of W, wherein

$$t3 \times E/_W \geq 7000 \text{mm}^{-1} \;.$$

**42.** The battery cell according to any one of claims 1 to 41, wherein at least one of two opposing surfaces of the current collecting end cover and the case is provided with a paste mask layer.

**43.** The battery cell according to claim 42, wherein the material of the first material layer is copper, the material of the second material layer is carbon steel, and the material of the paste mask layer is nickel.

**44.** The battery cell according to any one of claims 42 to 43, wherein a surface of the current collecting end cover is provided with a first paste mask layer, and a surface of the case is provided with a second paste mask layer, the first paste mask layer having a thickness of $u1$, and the second paste mask layer having a thickness of $u2$, wherein $1um \leq u1 + u2 \leq 9um$.

**45.** The battery cell according to any one of claims 1 to 44, wherein the electrode assembly further comprises a second tab having a polarity different from that of the first tab; and wherein
the battery cell further comprises electrode terminals, the electrode terminals being located at an end of the case that is away from the opening and being electrically connected to the second tab.

**46.** A battery, comprising a battery cell according to any one of claims 1 to 45.

**47.** An electrical apparatus, the electrical apparatus comprising a battery according to claim 46, the battery being used to provide electrical energy.

1000

100

300

200

**FIG. 1**

FIG. 2

**FIG. 3**

20

A

21

24

A

**FIG. 4**

**FIG. 5**

**FIG. 6**

**FIG. 7**

**FIG. 8**

**FIG. 9**

**FIG. 10**

FIG. 11

**FIG. 12**

271

a

273

b

272

**FIG. 13**

23

232

233

231

25

2322

25

231

**FIG. 14**

**FIG. 15**

**FIG. 16**

23

231

232

2323

α

233

**FIG. 17**

23

233

232    t2    2323    t3    2321

**FIG. 18**

## INTERNATIONAL SEARCH REPORT

| International application No. |
| --- |
| **PCT/CN2022/139146** |

**A.    CLASSIFICATION OF SUBJECT MATTER**

H01M50/10(2021.01)i;H01M50/147(2021.01)i;H01M50/169(2021.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNBABS; CNTXT; DWPI; SIPOABS; USTXT; CNKI; IEEE: 电池单体, 电芯, 盖, 直接, 焊, 极耳, 集流, 汇流, 转接, 连接, 壳, 省去, 无需, 加强件, 加强筋, 刻痕, 泄压, battery, cell, core, cover, lid, tab, connect, collector, bus disc, adapter, tab, direct, weld, reinforce, pressure relief, omit, without

**C.    DOCUMENTS CONSIDERED TO BE RELEVANT**

| Category* | Citation of document, with indication, where appropriate, of the relevant passages | Relevant to claim No. |
| --- | --- | --- |
| X | CN 216085065 U (NINGDE CONTEMPORARY AMPEREX TECHNOLOGY CO., LTD.) 18 March 2022 (2022-03-18) description, paragraphs 70-234, and figures 1-13 | 1-47 |
| X | CN 215933696 U (SPRINGPOWER TECHNOLOGY (SHENZHEN) CO., LTD.) 01 March 2022 (2022-03-01) description, paragraphs 3-32, and figures 1-2 | 1-47 |
| X | CN 214203812 U (NINGDE CONTEMPORARY AMPEREX TECHNOLOGY CO., LTD.) 14 September 2021 (2021-09-14) description, paragraphs 5-87 | 1, 45-47 |
| X | CN 114927809 A (SHENZHEN JUHEYUAN SCIENCE & TECHNOLOGY CO., LTD.) 19 August 2022 (2022-08-19) description, paragraphs 4-36 | 1-11, 45-47 |
| X | CN 201838639 U (CHAOYANG LIYUAN NEW ENERGY CO., LTD.) 18 May 2011 (2011-05-18) description, paragraphs 4-23 | 1, 46-47 |

☑ Further documents are listed in the continuation of Box C.      ☑ See patent family annex.

| | |
| --- | --- |
| *    Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **08 May 2023** | **27 May 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/139146**

**C.     DOCUMENTS CONSIDERED TO BE RELEVANT**

| Category* | Citation of document, with indication, where appropriate, of the relevant passages | Relevant to claim No. |
|---|---|---|
| X | CN 215342751 U (GUANGDONG MIC-POWER NEW ENERGY CO., LTD.) 28 December 2021 (2021-12-28) description, paragraphs 4-59 | 1, 45-47 |
| A | KR 20200007560 A (LG CHEMICAL LTD.) 22 January 2020 (2020-01-22) entire document | 1-47 |
| A | US 2008057394 A1 (SAFT GROUPE SA) 06 March 2008 (2008-03-06) description, paragraphs 15-60 | 1-47 |

Form PCT/ISA/210 (second sheet) (July 2022)

## INTERNATIONAL SEARCH REPORT
### Information on patent family members

International application No.

**PCT/CN2022/139146**

| Patent document cited in search report | | | Publication date (day/month/year) | Patent family member(s) | | | Publication date (day/month/year) |
|---|---|---|---|---|---|---|---|
| CN | 216085065 | U | 18 March 2022 | None | | | |
| CN | 215933696 | U | 01 March 2022 | None | | | |
| CN | 214203812 | U | 14 September 2021 | None | | | |
| CN | 114927809 | A | 19 August 2022 | CN | 217641558 | U | 21 October 2022 |
| CN | 201838639 | U | 18 May 2011 | None | | | |
| CN | 215342751 | U | 28 December 2021 | None | | | |
| KR | 20200007560 | A | 22 January 2020 | None | | | |
| US | 2008057394 | A1 | 06 March 2008 | FR | 2905525 | A1 | 07 March 2008 |
| | | | | FR | 2905525 | B1 | 31 October 2008 |
| | | | | DE | 602007001216 | D1 | 16 July 2009 |
| | | | | US | 8021780 | B2 | 20 September 2011 |
| | | | | JP | 2008066302 | A | 21 March 2008 |
| | | | | US | 2011244316 | A1 | 06 October 2011 |
| | | | | US | 8338024 | B2 | 25 December 2012 |
| | | | | EP | 1898481 | A1 | 12 March 2008 |
| | | | | EP | 1898481 | B1 | 03 June 2009 |

Form PCT/ISA/210 (patent family annex) (July 2022)